# EUROPEAN PATENT SPECIFICATION

(11) **EP 1 158 338 B1**
(45) Date of publication and mention of the grant of the patent: **01.03.2006**
(21) Application number: 01112284.3
(22) Date of filing: 18.05.2001
(51) Int. Cl.: G02C 7/02, G06F 19/00, A61B 3/10

(54) **Method for simulating an ocular optical system and apparatus therefor**
Verfahren und Gerät zur Simulation eines optischen Okularsystems
Méthode et dispositif pour la simulation d'un système oculaire

(30) Priority: 22.05.2000 JP 2000150450
(43) Date of publication of application: 28.11.2001
(73) Proprietor: HOYA CORPORATION, Shinjuku-ku, Tokyo 161-8525 (JP)
(72) Inventor: Qi, Hua, Tokyo, 161-8525 (JP)
(74) Representative: Kuhnen & Wacker

(56) References cited:
- EP-A- 0 734 683
- EP-A- 0 950 887
- EP-A- 1 018 691

## Description

### Field of the Invention

The present invention relates to a method for simulating how things are seen when the outside world is observed through spectacle lenses placed in front of both right and left eyes according to claim 1. Moreover, the present invention also relates to an apparatus for carrying through the inventive method according to claim 8.

### Prior Art

From EP-A-1 018 691 an ocular optical system and simulating method and simulating apparatus are known. This known ocular optical system simulating method and simulating apparatus enable simulation of how things can be seen together with fluctuation, deformation, blur, etc., occurring when a lens system such as a progressive addition lens is worn. A rotation-based retinal image, defined as an image obtained by turning an eyeball with respect to all object points within a field of vision and by connecting images caught at the fovea is made. The image is made by first creating an original image having a specific angular field of vision and entering the eye having a specific rotation center point. Then, a deformed original image having deformation occurring when the original image is seen through the lens system is created by using ray tracing. A PSF on the retina of an eye-model from light from the object points of the original image in an optical system composed of the lens system and a spectacle model is determined. Next, the deformed original image and the PSF of each pixel of the original image are convoluted. The obtained rotation-based retinal image is edited further to result in a motion picture image of the rotation-based retinal image. The PSF is found by selecting sampling points on an object and the PSF other than those of the sampling points is found by using approximation methods including spline interpolation.

A method for simulating an ocular optical system in accordance with which a scene of external things actually seen by an observer through spectacle lenses placed in front of each of right and left eyes is simulated and an apparatus therefor have been disclosed by the present inventor in Japanese Patent Application No. Heisei 10(1998)-288077.

In the method and the apparatus described above, a scene of external things actually seen by an observer through a lens placed in front of a single eye is simulated. In accordance with the above method and by using the above apparatus, the actual human perception can be taken into consideration and the visual perception including fluctuation, distortion and blur felt in the use of optical spectacle lenses such as progressive addition lenses can be closely simulated.

### Background of the Invention

Since a person observes things with both eyes, the simulation of visual perception with a single eye is not always sufficient for the purpose of expressing and evaluating the visual perception of external things observed through spectacle glasses. Generally on a progressive addition lens, the area for viewing objects of close distance is placed at a position displaced a little bit nasally for the consideration of convergence. Therefore, the shape of the lenses becomes asymmetric in the horizontal direction to some degree. This, by itself, is not a defect but a great progress of the progressive addition lens. However, in a monocular rotation-based retinal image, the asymmetry in the horizontal direction is faithfully reproduced and the image has distortion different from that in the actually perceived image.

To remove the distortion of the asymmetry in the horizontal direction and simulate the proper human perception, it is necessary to take the function of binocular vision into the simulation. Thus, defining and calculating distortion and blur arising from the function of binocular vision has been the subject of study. In accordance with specific assumptions and methods found by the present inventor, the visual perception obtained by binocular vision can be approximately simulated using image-processing technology.

### Summary of the Invention

The present invention has been made under the above circumstances. It is therefore an object of the present invention to provide a method and apparatus for simulating an ocular optical system which enables simulating visual perception having fluctuation, distortion and blur including the function of binocular vision in the use of spectacle lenses such as progressive addition lenses.

According to the inventive method this object is solved by the features of claim 1.

Improved embodiments of the inventive method result from subclaims 2 to 7.

In connection with the inventive apparatus the above object is solved by the features of claim 8.

Improved embodiments of the inventive apparatus result from subclaims 9 and 10.

According to a first aspect the inventive method for simulating an ocular optical system which comprises simulating a scene of external things actually seen by an observer through two spectacle lenses each placed in front of right and left eyes in accordance with a process comprises:
creating a binocular foveal image with respect to each of all object points in a visual field by computer simulation as an image perceived by the eyes through the spectacle lenses, wherein the binocular foveal image is an image united by images projected on each fovea on right and left single retinas when each eyeball is rotated in a manner such that the object point in the visual field is caught at the fovea of each single retina, the single retina being a retina of a right or left single eyeball; and
simulating the scene of external things actually seen by an observer through two spectacle lenses each placed in front of right and left eyes using the binocular foveal image.

The inventive method for simulating an ocular optical system further comprises:
creating a binocular synkinetic rotation-based retinal image by computer simulation, wherein the binocular synkinetic rotation-based retinal image is an image created by connecting the binocular foveal images; and
simulating the scene of external things actually seen by an observer through spectacle lenses placed in front of each of right and left eyes using the binocular synkinetic rotation-based retinal image.

Moreover, according to the present invention the binocular foveal image or the binocular synkinetic rotation-based retinal image may be displayed on a display apparatus.

The inventive method for simulating an ocular optical system with which the binocular synkinetic rotation-based retinal image is created in accordance with a process comprises:
a step of creating an original image which comprises placing a midpoint of binocular rotation at a specific position, the midpoint of binocular rotation being a midpoint between centers of monocular rotation of right and left eyes, and creating, as the original image, an image within a visual field which is a specific pyramidal field having an apex at midpoint of binocular rotation;
a step of creating a distorted original image in accordance with a ray tracing method, wherein the distorted original image is an image having distortion, which is obtained by observing the objects in the visual field through the spectacle lenses;
a step of deriving PSFs (point spread functions) which comprises, in each composed optical system of the spectacle lens and the ocular optical system, obtaining right and left monocular PSFs on each retina caused by light emitted from an object point, and deriving a binocular PSF by uniting the right and left monocular PSFs, wherein PSF is a function which represents a distribution of luminance; and
a step of convolution, which comprises convoluting the distorted original image created in the step of creating a distorted original image and the binocular, PSFs derived in the step of obtaining PSF with respect to each of all pixels of the original image.

According to a second aspect of the inventive method the binocular synkinetic rotation-based retinal image is created in accordance with a process comprising:
a step of creating an original image, which comprises:
   creating virtual objects by using computer graphics and placing them in a virtual three-dimensional space;
   placing midpoint of binocular rotation at a specific position in the virtual three-dimensional space;
   creating, as the original image, an image of the virtual objects within a visual field which is a specific range of pyramid whose apex is located at the midpoint of binocular rotation and whose central axis is along a direction of a specific central visual line; and
   obtaining, with respect to each of all object points each corresponding to a pixel of the original image, an objective distance that is a distance between the object point and the midpoint of binocular rotation;

   a step of creating a distorted original image, which comprises:
   defining, for viewing an object point, a direction of synkinetic binocular rotation, which is uniquely determined, by both directions of rotation of right and left eyeballs toward the object point;
   obtaining a central direction of synkinetic binocular rotation in accordance with a ray tracing method so that each of right and left monocular central principal rays passes through a specific position at each spectacle lens respectively, wherein the central direction of synkinetic binocular rotation is the direction of synkinetic binocular rotation for viewing the object point located at a center of the visual field and the right and left monocular central principal rays are principal rays directed from right and left eyeballs, respectively, toward the central object point;
   obtaining, with respect to each of all object points each corresponding to a pixel of the original image, the direction of synkinetic binocular rotation for viewing the object point as the position of the object point in an after-lens visual field in accordance with the ray tracing method, wherein the after-lens visual field is a visual field whose central axis is along the central direction of synkinetic binocular rotation;
   creating a distorted original image which is an image obtained in the after-lens visual field and has distortion in the object points caused by the spectacle lenses; and
   deriving, with respect to each of all object points each corresponding to a pixel of the original image, both right and left principal ray-passing positions, wherein the principal ray-passing position is a position on the spectacle lens through where the principal ray toward the object point passes;
   a step of deriving positions of spectacle frames which comprises creating images of spectacle frame marks, which indicate positions of right and left spectacle frames on the original image or on the distorted original image by using data of the principal ray-passing positions, which are obtained in the step of creating a distorted original image;

   a step of deriving PSF, which comprises:
   introducing an accommodation-dependent ocular optical system to each right and left eye as a model of the ocular optical system;
   calculating, with respect to each of all object points each corresponding to a pixel of the original image, both distances from the object point to the right and left centers of monocular rotation using the objective distance obtained in the step of creating an original image;
   setting, with respect to each of all object points each corresponding to a pixel of the original image, both power of accommodation of right and left ocular optical system to a same value or different values in accordance with each distance from the object point to each center of monocular rotation, and each refractive power of spectacle lens at each principal ray-passing positions which is obtained in the step of creating a distorted original image;
   deriving, with respect to each of all object points each corresponding to a pixel of the original image, a monocular PSF for each of right and left eyes in a composed optical system comprising the spectacle lens and the ocular optical system which is rotated in accordance with the direction of monocular rotation toward the object point, wherein PSF is a function which represents a distribution of luminance on the retina of the accommodation-dependent ocular optical system caused by the light emitted from the object point; and
   deriving, with respect to each of all object points each corresponding to a pixel of the original image, a binocular PSF by uniting both the right and left monocular PSFs obtained above; and

   a step of convolution, which comprises:
   convoluting the distorted original image created in the step of creating a distorted original image and the binocular PSFs of all object points each corresponding to a pixel of the original image, which are obtained in the step of obtaining PSF;
   creating a binocular synkinetic rotation-based retinal image which is the image of the virtual objects placed in the virtual three-dimensional space observed by both eyes located at specific positions and orientated to specific directions of visual lines through specific positions of the spectacle lenses; and
   where necessary, overlaying the images of both right and left spectacle frame marks created in the step of deriving positions of spectacle frames to the binocular synkinetic rotation-based retinal image.

Furthermore the inventive method for simulating an ocular optical system which comprises simulating a scene of external things actually seen by an observer through two spectacle lenses each placed in front of right and left eyes in accordance with a process comprises:
creating virtual objects by using computer graphics and placing them in a virtual three-dimensional space;
creating a story of changes with time of the position of midpoint of binocular rotation, the direction of the central visual line, both principal ray-passing positions on each spectacle lens, the amount of deformation and displacement of the virtual objects;
creating a binocular synkinetic rotation-based retinal image at each point of time during the change in accordance with the created story using the method for simulating an ocular optical system described in any of the fourth means and the fifth means; and
creating a video image of the binocular synkinetic rotation-based retinal image by editing the binocular synkinetic rotation-based retinal images at all points of time during the change.

As a further means, a method for simulating an ocular optical system described in any of the former means, wherein, in the step of creating a distorted original image, the definition of the direction of synkinetic binocular rotation satisfies following principles:
1. A single unique direction of synkinetic binocular rotation is determined by directions of right and left monocular rotations;
2. The direction of synkinetic binocular rotation continuously changes with changes in the directions of right and left monocular rotations; and
3. Space feeling based on the direction of synkinetic binocular rotation is not much different from space feeling based on the direction of each right and left monocular rotation.

With the inventive method for simulating an ocular optical system in the step of creating a distorted original image, the direction of synkinetic binocular rotation is defined as follows: $\overline{r} = \frac{k \overline{{r}_{R}} + ( 1 - k ) {\overline{r}}_{L}}{| k {\overline{r}}_{R} + ( 1 - k ) {\overline{r}}_{L} |}$
wherein $\overline{r}$ represents a unit vector in the direction of synkinetic binocular rotation, ${\overline{r}}_{R}$ and ${\overline{r}}_{L}$ represent unit vectors in the directions of right and left monocular rotations, respectively, in Descartes coordinates and 0<k<1.

Furthermore with the inventive method for simulating an ocular optical system in the step of deriving PSF, the binocular PSF is derived by uniting both right and left monocular PSFs for viewing an object point representing each of all pixels in the original image in accordance with following principles:
1. When the monocular PSF for the right eye and the monocular PSF for the left eye are close to each other, the united PSF is of a distribution, which is more concentrated than each distribution of both monocular PSF;
2. When the monocular PSF for the right eye and the monocular PSF for the left eye are different from each other in a great degree, the united PSF is of a distribution which is close to the most concentrated distribution between both monocular PSFs; and
3. Continuity and uniqueness of the united PSF are maintained.

With the inventive method for simulating an ocular optical system in the step of deriving PSF, both right and left monocular PSFs for viewing an object point representing each of all pixels in the original image are derived using a same method; each derived monocular PSF is optimally approximated with a two-dimensional normal distribution function in accordance using a same method; and parameters of a two-dimensional normal distribution function approximating the binocular PSF united by the both monocular PSFs are derived from parameters of the two-dimensional normal distribution functions approximating the both right and left monocular PSFs in accordance with following procedures:

In polar coordinates, when the monocular PSF for a right eye is expressed as: ${p}_{R} ( r , θ ) = \frac{\sqrt{{A}_{R}^{2} - {B}_{R}^{2}}}{2 π} exp ( - \frac{{r}^{2}}{2} ( {A}_{R} - {B}_{R} cos ( 2 θ - 2 {α}_{R} ) ) )$
and the monocular PSF for the left eye is expressed as: ${p}_{L} ( r , θ ) = \frac{\sqrt{{A}_{L}^{2} - {B}_{L}^{2}}}{2 π} exp ( - \frac{{r}^{2}}{2} ( {A}_{L} - {B}_{L} cos ( 2 θ - 2 {α}_{L} ) ) ) ,$
then the binocular PSF united by both monocular PSFs is expressed as: $p ( r , θ ) = \frac{\sqrt{{A}^{2} - {B}^{2}}}{2 π} exp ( - \frac{{r}^{2}}{2} ( A - B cos ( 2 θ - 2 α ) ) ) ,$
where parameters *A, B, α* of the united binocular PSF are expressed as: $A = κ ( {A}_{R} + {A}_{L} )$ $B = κ \sqrt{{B}_{R}^{2} + {B}_{L}^{2} + 2 {B}_{R} {B}_{L} cos 2 ( {α}_{R} - {α}_{L} )}$ $tan 2 a = \frac{{B}_{R} sin 2 {α}_{R} + {B}_{L} sin 2 {α}_{L}}{{B}_{R} cos 2 {α}_{R} + {B}_{L} cos 2 {α}_{L}} ,$
wherein κ is expressed as: $κ = \frac{2 {S}_{C}}{{S}_{R} + {S}_{L}} ,$
wherein *S*_{*R*} is the area of the ellipse ${r}^{2} ( {A}_{R} - {B}_{R} cos ( 2 θ - 2 {α}_{R} ) ) = 1$
which represents the distributive area of right monocular PSF
and *S*_{*L*} is the area the ellipse ${r}^{2} ( {A}_{L} - {B}_{L} cos ( 2 θ - 2 {α}_{L} ) ) = 1$
which represents the distributive area of left monocular PSF
and *S*_{*C*} is the area of the common portion of the both ellipses
and κ is the ratio of *S*_{*C*} to the average area $\frac{{S}_{R} + {S}_{L}}{2} .$

The apparatus according to the present invention for simulating an ocular optical system which is used for simulating a scene of external things actually seen by an observer through two spectacle lenses each placed in front of right and left eyes and comprises:
an apparatus for computer simulation used for creating a binocular foveal image with respect to each of all object points in a visual field by computer simulation as an image perceived by the eyes through the spectacle lenses, wherein the binocular foveal image is an image united by images projected on each fovea on right and left retinas when each eyeball is rotated in a manner such that an object point in the visual field is caught at the fovea of each single retina, the single retina being a retina of a right or left single eyeball;
an apparatus for computer simulation used for creating a binocular synkinetic rotation-based retinal image by computer simulation, wherein the binocular synkinetic rotation-based retinal image is an image created by connecting the binocular foveal images; and
an apparatus for displaying the binocular foveal image or the binocular synkinetic rotation-based retinal image.

The apparatus according to the present invention for simulating an ocular optical system which is used for simulating a scene of external things actually seen by an observer through two spectacle lenses each placed in front of right and left eyes comprises:
a means for creating an original image, which is used for:
   creating virtual objects by using computer graphics and placing them in a virtual three-dimensional space;
   placing midpoint of binocular rotation at a specific position in the virtual three-dimensional space;
   creating, as the original image, an image of the virtual objects within a visual field which is a specific range of pyramid whose apex is located at the midpoint of binocular rotation and whose central axis is along a direction of a specific central visual line; and
   deriving, with respect to each of all object points each corresponding to a pixel of the original image, an objective distance that is a distance between the object point and the midpoint of binocular rotation;
a means for creating a distorted original image, which is used for:
   defining, for viewing an object point, a direction of synkinetic binocular rotation, which is uniquely determined, by both directions of rotation of right and left eyeballs toward the object point;
   deriving a central direction of synkinetic binocular rotation in accordance with a ray tracing method so that each of right and left monocular central principal rays passes through a specific position at each spectacle lens respectively, wherein the central direction of synkinetic binocular rotation is the direction of synkinetic binocular rotation for viewing the object point located at a center of the visual field and the right and left monocular central principal rays are principal rays directed from right and left eyeballs, respectively, toward the central object point;
   deriving, with respect to each of all object points each corresponding to a pixel of the original image, the direction of synkinetic binocular rotation for viewing the object point as the position of the object point in an after-lens visual field in accordance with the ray tracing method, wherein the after-lens visual field is a visual field whose central axis is along the central direction of synkinetic binocular rotation;
   creating a distorted original image which is an image obtained in the after-lens visual field and has distortion in the object points caused by the spectacle lenses; and
   deriving, with respect to each of all object points each corresponding to a pixel of the original image, both right and left principal ray-passing positions, wherein the principal ray-passing position is a position on the spectacle lens through where the principal ray toward the object point passes;
a means for deriving positions of spectacle frames which comprises creating images of spectacle frame marks, which indicate positions of right and left spectacle frames on the original image or on the distorted original image by using data principal ray-passing positions, which are derived in the step of creating a distorted original image;
a means for deriving PSF (point spread functions), which is used for:
   introducing an accommodation-dependent ocular optical system to each right and left eye as a model of the ocular optical system;
   calculating, with respect to each of all object points each corresponding to a pixel of the original image, both distances from the object point to the right and left centers of monocular rotation using the objective distance obtained in the step of creating an original image;
   setting, with respect to each of all object points each corresponding to a pixel of the original image, both power of accommodation of right and left ocular optical system to a same value or different values in accordance with each distance from the object point to each center of monocular rotation, and each refractive power of spectacle lens at each principal ray-passing positions which is obtained in the step of creating a distorted original image;
   deriving, with respect to each of all object points each corresponding to a pixel of the original image, a monocular PSF for each of right and left eyes in a composed optical system comprising the spectacle lens and the ocular optical system which is rotated in accordance with the direction of monocular rotation toward the object point, wherein PSF is a function which represents a distribution of luminance on the retina of the accommodation-dependent ocular optical system caused by the light emitted from the object point; and
   deriving, with respect to each of all object points each corresponding to a pixel of the original image, a binocular PSF by uniting both the right and left monocular PSFs obtained above; and
a means for convolution, which is used for:
   convoluting the distorted original image created in the step of creating a distorted original image and the binocular PSFs of all object points each corresponding to a pixel of the original image, which are obtained in the step of obtaining PSF;
   creating a binocular synkinetic rotation-based retinal image which is the image of the virtual objects placed in the virtual three-dimensional space observed by both eyes located at specific positions and orientated to specific directions of visual lines through specific positions of the spectacle lenses; and
   where necessary, overlaying the images of both right and left spectacle frame marks created in the step of deriving positions of spectacle frames to the binocular synkinetic rotation-based retinal image.

The apparatus of the present invention for simulating an ocular optical system, which is used for simulating a scene of external things actually seen by an observer through two spectacle lenses each placed in front of right and left eyes in accordance with a process further comprises:
creating virtual objects by using computer graphics and placing them in a virtual three-dimensional space;
creating a story of changes with time of the position of midpoint of binocular rotation, the direction of the central visual line, both principal ray-passing positions on each spectacle lens, the amount of deformation and displacement of the virtual objects;
creating a binocular synkinetic rotation-based retinal image at each point of time during the change in accordance with the story created above; and
creating a video image of the binocular synkinetic rotation-based retinal image by editing the binocular synkinetic rotation-based retinal image s at all points of time during the change.

### Brief Description of the Drawings

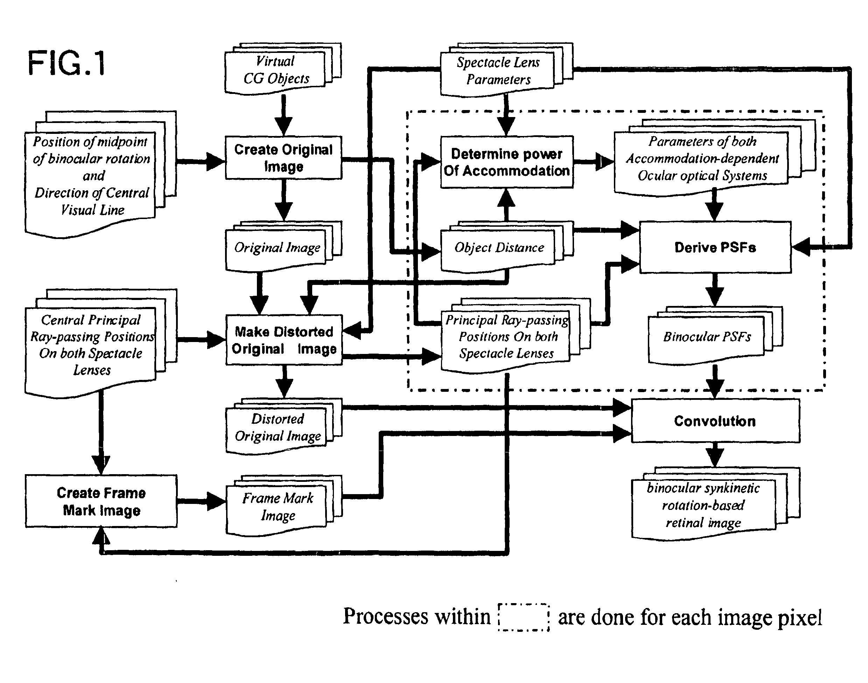

- Fig. 1: shows a diagram exhibiting the flow of creating a binocular synkinetic rotation-based retinal image in Embodiment 1 of the method for simulating an ocular optical system of the present invention.
- Fig. 2: shows a diagram exhibiting the coordinate system of the visual field of an original image.
- Fig. 3: shows a diagram exhibiting the definition of the direction of synkinetic binocular rotation.
- Fig. 4: shows a diagram exhibiting the coordinate system for deriving the direction of synkinetic binocular rotation through spectacle lenses.
- Fig. 5: shows a table listing ocular optical parameters of the Navarro model in the condition without accommodation.
- Fig. 6: shows a table listing accommodation-dependences of ocular optical parameters of the Navarro model.
- Fig. 7: shows diagrams for describing PSF.
- Fig. 8: shows a diagram exhibiting an ocular optical system having a spectacle lens when an object is observed.
- Fig. 9: shows diagrams exhibiting the entrance pupil dividing method.
- Fig. 10: shows diagrams exhibiting a united binocular PSF.
- Fig. 11: shows a binocular synkinetic rotation-based retinal image in Embodiment 1.
- Fig. 12: shows a diagram exhibiting the flow of creating a video image of a binocular synkinetic rotation-based retinal image.
- Fig. 13: shows a block diagram exhibiting the construction of the apparatus for simulating an ocular optical system of the present invention.

### (Embodiment 1)

The method for simulating an ocular optical system of the present embodiment is a method for creating a still image of a binocular synkinetic rotation-based retinal image when three-dimensional virtual objects created by computer graphics is observed through spectacle two lenses each placed in front of right and left eyes. The binocular synkinetic rotation-based retinal image is an image which is created, based on specific assumptions found by the present inventor, by treating the above image of three-dimensional virtual objects with optical effects taken into consideration using image processing technology in order to approximately reproduce the image perceived by the eyes. In other words, the binocular synkinetic rotation-based retinal image is not an optical image projected on the retinal surfaces of eyes but an image defined as an image created as follows: for each of all object points in the visual field, both right and left eyeballs are rotated in a manner such that the object point is caught at the fovea on the retina of each eyeball and a united image of the object point is created by uniting both images each projected on the right and left foveae; and then the binocular synkinetic rotation-based retinal image is created by connecting these united images for all object points. The method for simulating an ocular optical system used in Embodiment 1 comprises (1) a step of creating an original image, (2) a step of creating a distorted original image, (3) a step of deriving positions of spectacle frames, (4) a step of deriving PSF and (5) a step of convolution.

### (1) A step of creating an original image

This step comprises creating virtual objects by using computer graphics and placing them in a virtual three-dimensional space; placing midpoint of binocular rotation at a specific position in the virtual three-dimensional space; creating, as the original image, an image of the virtual objects within a visual field which is a specific range of pyramid whose apex is located at the midpoint of binocular rotation and whose central axis is along a direction of a specific central visual line; and deriving, with respect to each of all object points each corresponding to a pixel of the original image, an objective distance which is a distance between the object point and the midpoint of binocular rotation. This step will be described in more detail in the following.

### a. Creation virtual objects as the basis of the original image

In accordance with a well-known method of computer graphics, virtual objects are created and placed in a virtual three-dimensional space. For example, a disk, a chair and other furniture placed in a room or a flowerbed, trees and traffic signs placed in an outdoor field may be created.

### b. Creation of an original image

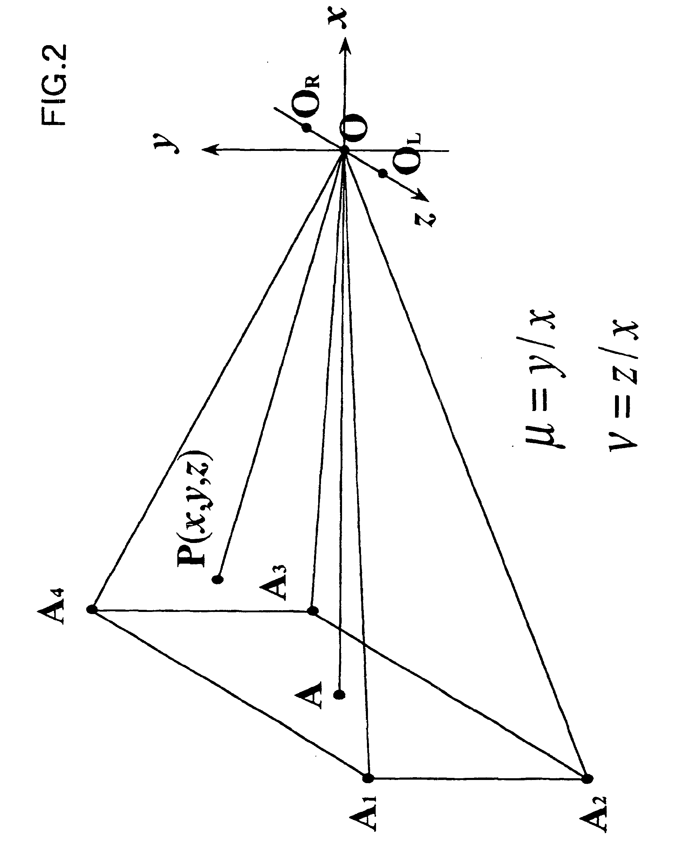

The midpoint of binocular rotation, defined as the midpoint of both centers of monocular rotation, is placed at a specific position in the virtual three-dimensional space and an original image is created as an image of the virtual objects created above within a visual field which is a specific range of pyramid whose apex is located at the midpoint of binocular rotation and whose central axis is along a direction of a specific central visual line. More specifically, as shown in Figure 2, a visual field is set as a pyramid A₁A₂A₃A₄ whose apex is located at O, the midpoint of centers of right monocular rotation OR and left monocular rotation O_{L}, and whose central axis is along the direction of the central visual line OA which is perpendicular to the line O_{R}O_{L}. An image is created within this visual field as the original image. In the pyramidal visual field, the position of an arbitrary point P(x,y,z) on the original image is expressed by coordinates µ=y/x and v=z/x wherein (x,y,z) is the coordinates of the point within a Cartesian coordinate system whose original point is located at O and whose x-axis is along the line AO. When each object point in the visual field is projected in this manner, any straight line in the space is always projected as a straight line on the image. Therefore, the projection is of no distortion. An image created by projecting every object point in accordance with this projection is used as the original image.

### c. Obtaining an objective distance to an object point

In the step of creating an original image, the distance between the object point P(x,y,z) and the midpoint of binocular rotation O, i.e. the objective distance, is also obtained from the values of the coordinates.

### (2) A step of creating a distorted original image

In this step, an image having distortion caused by the spectacle lenses when the original visual field is observed through spectacle lenses is created and positions on both spectacle lenses through where each of all object points is observed. The position of an object point observed by both eyes is expressed by the direction of synkinetic binocular rotation. The definition of the direction of synkinetic binocular rotation is the key determining the space feeling of binocular vision. In accordance with the study by the present inventor, the definition of the direction of synkinetic binocular rotation should satisfy the following principles:
1. A single unique direction of synkinetic binocular rotation is determined by directions of right and left monocular rotations;
2. The direction of synkinetic binocular rotation continuously changes with changes in the directions of right and left monocular rotations; and
3. Perception of space based on the direction of synkinetic binocular rotation approximates the perception of space based on the direction of both right and left monocular rotation.

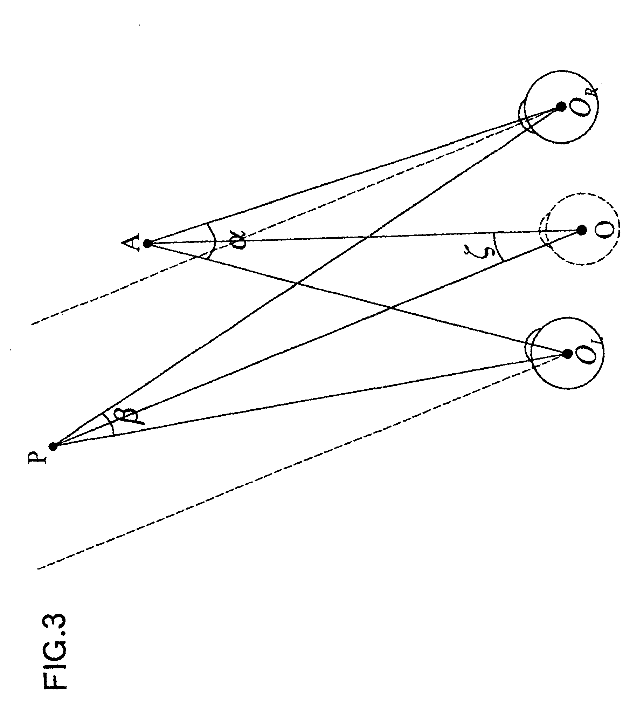

One of the methods of defining the direction of synkinetic binocular rotation is the method using the Hering's law. Mr. Hering in 1868 proposes the Hering's law, which states that, the right eye and the left eyes rotate always in the same amount in the same direction or opposite directions. The rotation of both eyes for seeing an arbitrary point in a space can be decomposed into two terms, i.e., the version and the vergence. As shown in Figure 3, rotation of each of right and left eyes for seeing a point P can be decomposed into the version which is rotation of the eyes in the same direction in the same amount and the vergence which is rotations of the eyes in opposite directions by the same angle of β/2 in a visual plane containing both centers of monocular rotation and the point P. If the direction of the version is defined as the direction of synkinetic binocular rotation, the direction is along the line, which equally divides the angle between the directions of right and left monocular rotations.

When the unit vectors in the directions of right and left monocular rotations are expressed by: ${\overline{r}}_{R}$and ${\overline{r}}_{L}$the unit vector in the direction of synkinetic binocular rotation may be expressed as: $\overline{r} = \frac{{\overline{r}}_{R} + {\overline{r}}_{L}}{| {\overline{r}}_{R} + {\overline{r}}_{L} |}$

In the Hering's law, the right eye and the left eye are assumed to be completely equal. However, in actuality, a phenomenon of dominant eye, i.e. one eye plays the dominant role compared with the other eye, is discoverable although the degree may be different. Therefore, a coefficient k is introduced in the present invention and the unit vector in the direction of synkinetic binocular rotation is defines as: $\overline{r} = \frac{k {\overline{r}}_{R} + ( 1 - k ) {\overline{r}}_{L}}{| k {\overline{r}}_{R} + ( 1 - k ) {\overline{r}}_{L} |}$
wherein 0<k<1.

The direction of synkinetic binocular rotation for seeing an object point through spectacle lenses is affected by the effect of refraction of the spectacle lenses. A monocular principal ray is defined as the ray emitted from an object point and going through a spectacle lens toward a center of monocular rotation. A direction of monocular rotation is defined as the direction of the principal ray after leaving the rear surface of the spectacle lens since this is the direction the eyeball takes for seeing the object point. The direction of synkinetic binocular rotation can be derived from the directions of both right and left monocular rotations. A monocular central principal ray is defined as the principal ray emitted from the object point at the center of the visual field. A central direction of monocular rotation is defined as the direction of monocular rotation along the direction of the central principal ray. A central direction of synkinetic binocular rotation is defined as the direction of synkinetic binocular rotation obtained from the right and left central directions of monocular direction.

A distorted original image is an image expressed by positions of object points each corresponding to a pixel of the original image in an after-lens visual field, which is the visual field having the central axis along the central direction of synkinetic binocular rotation. The central direction of synkinetic binocular rotation can be determined in accordance with the ray tracing method so that the right and left central principal rays pass the right and left spectacle lenses, respectively, at each positions prescribed in advance. The position of each object point in the after-lens visual field can be expressed by the direction of synkinetic binocular rotation for viewing the object point relative to the central direction of synkinetic binocular rotation. The right and left principal rays and the positions of the right and left principal rays on each spectacle lens with respect to each object point can be obtained in accordance with the ray tracing method.

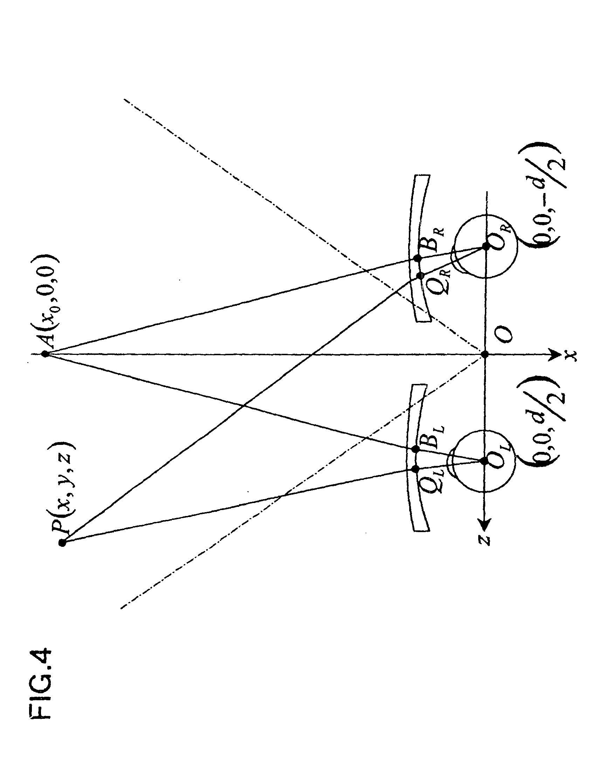

As shown in Figure 4, when spectacle lenses are placed between the central object point A (x₀, 0, 0) in the visual field and the right and left centers of monocular rotation O_{R}(0, 0, -d/2) and O_{L}(0, 0, d/2), respectively, it is necessary for seeing the central object A that the right eyeball be rotated not in the direction of O_{R}A but in the direction O_{R}B_{R}, i.e., toward the position of the right ray on the right spectacle lens, and the left eyeball be rotated not in the direction of O_{L}A but in the direction O_{L}B_{L}, i.e., toward the position of the left ray on the left lens. The rays AB_{R}O_{R} and AB_{L}O_{L} are the right and left central monocular principal rays, respectively. The vectors B_{R}O_{R} and B_{L}O_{L} show the right and left central directions of monocular rotation, respectively. The positions of the right and left central monocular principal rays on the respective spectacle lenses, i.e. principal ray-passing positions, B_{R} and B_{L} are not independently set but affected by the distance d between both centers of monocular rotation and the distance to the object point.

In accordance with the formula defining the direction of synkinetic binocular rotation described above, the direction of synkinetic binocular rotation
$\overline{r}$
can be obtained from the unit vectors in the directions of B_{R}O_{R} and B_{L}O_{L}
${\overline{r}}_{R}$ and ${\overline{r}}_{L}$
respectively. The visual field having the central axis (the x' axis) along
$\overline{r}$
is referred to as the after-lens visual field.

The direction of synkinetic binocular rotation for seeing an arbitrary point P(x,y,z) in the visual field can be obtained in the same manner. When the unit vector in the direction of synkinetic binocular rotation for seeing the point P in the coordinate system of the after-lens visual field is expressed as: ${\overline{r}}^{′} = {x}^{′} \overline{i} + {y}^{′} \overline{j} + {z}^{′} \overline{k}$
the coordinates of the point P in the image in the after-lens visual field are µ'=y'/x' and ν'=z'/x'. When each object point in the visual field is projected in the after-lens visual field as an image, in general, a straight line in the space is not projected as a straight line in the resultant image. Instead, an image having distortion caused by the lens is obtained. The image in the after-lens visual field created as described above is referred to as the distorted original image.

In the step of creating a distorted original image, principal ray-passing positions on both spectacle lenses are also obtained with respect to each of all object points. Although the ray tracing calculation must be carried out to all object points within the visual field to find their directions of synkinetic binocular rotation and principal ray-passing positions on both spectacle lens, it is possible to obtain these data with less amount of calculation while their calculative errors are controlled within a certain range by using a mathematical method called spline interpolation.

### (3) A step of obtaining the positions of spectacle frames

In this step, using the data of principal ray-passing positions on each spectacle lens which are derived in the step of creating a distorted original image, positions of edges and hidden marks of right and left spectacle frames on the distorted original image are derived and images of spectacle frame marks are created. By comparing the image of spectacle frame marks with the distorted original image, the positions on the right and left spectacle lenses through which each of all objects in the image are observed can be exactly found.

### (4) A step of deriving PSF

In this step, an accommodation-dependent ocular optical system is introduced to each right and left eye and, with respect to each of all object points each corresponding to a pixel of the original image, both distances from the object point to the right and left centers of monocular rotation are derived from the objective distance obtained in the step of creating an original image. Then, powers of accommodation of right and left ocular optical system are set to a same value or different values with each other in accordance with each distance from the object point to each center of monocular rotation, and each refractive power of spectacle lens at each principal ray-passing position which is derived in the step of creating a distorted original image. A monocular PSF is obtained for each of right and left eyes in a composed optical system comprising the spectacle lens and the accommodation-dependent ocular optical system, which is rotated in accordance with the direction of monocular rotation. Here PSF is a function, which represents the distribution of luminance on the retina of the accommodation-dependent ocular optical system caused by the light emitted from the object point. Then, a binocular PSF is derived by uniting both monocular PSFs obtained above. This step will be described more specifically in the following.

### a. Introduction of an accommodation-dependent ocular optical system

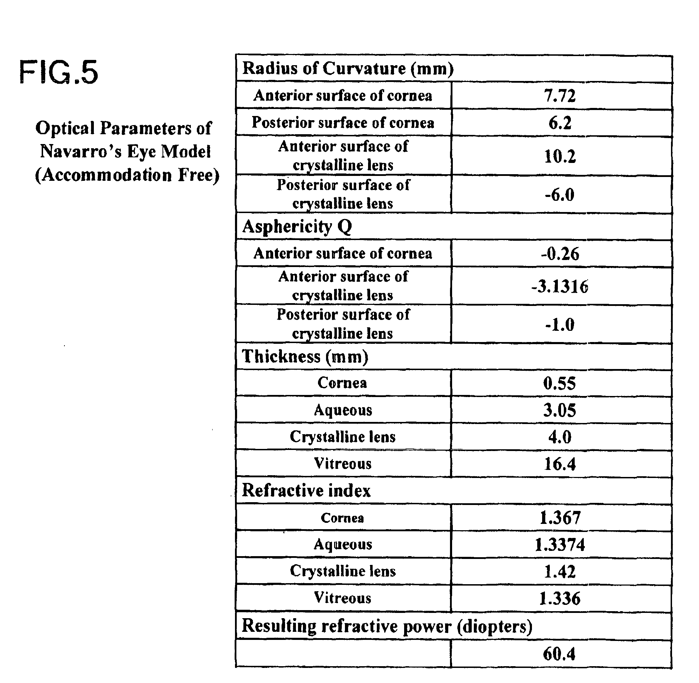

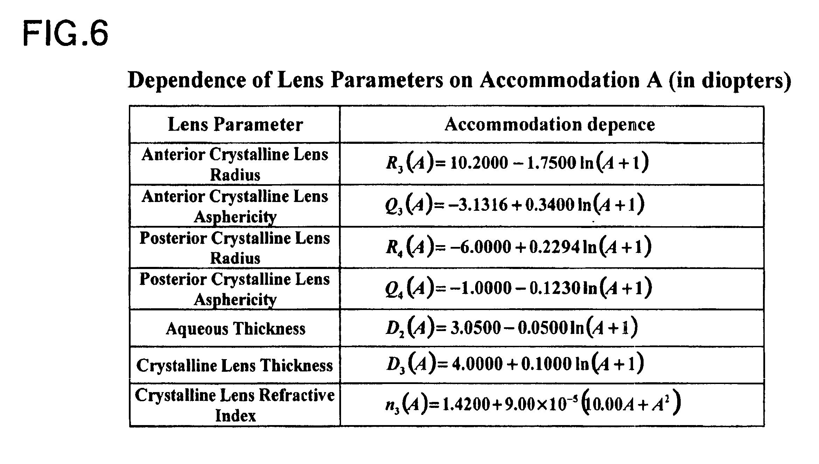

To obtain PSF on the retina, introduction of an ocular optical system is necessary. The eye has the function of accommodation in accordance with the distance to an object and this function should be taken into consideration. In the present embodiment, the accommodation-dependent ocular optical system reported by R. Navarro et al is used. In the Navarro model, not only the paraxial value but also the spherical aberration and the chromatic aberration are adjusted to the actually measured values of an eye. The model has a simple four-surface structure and three surfaces among the four surfaces are aspheric axially symmetrical quadratic surfaces. Since the crystalline lens does not have gradient index, the tracing calculation can be conducted easily. The radius of curvatures, the thickness and the degrees of asphericity change in proportion to the logarithm of the power of accommodation. Figure 5 shows a table listing ocular optical parameters of the Navarro model in the condition without accommodation. Figure 6 shows a table listing accommodation dependencies of ocular optical parameters. The aspherical surface is expressed as y²+z²+(1+Q)x²-2rX=0, wherein Q represents the degree of asphericity.

### b. Determination of the power of accommodation

When a person observes an object placed at a close distance, the accommodation takes place. The power of accommodation is expressed by the inverse of the distance to the object. For example, the power of accommodation for observing an object at the distance of 1 meter is 1 diopter. When a progressive addition lens is used, the accommodation is performed partially by the progressive addition lens and the accommodational load of the eye can be eased. Therefore, the power of accommodation in the use of a progressive addition lenses depends not only on the distance to the object but also on the refractive power of the lens at the position at which the ray passes. Moreover, since a person wearing a progressive addition lens is usually presbyopia, i.e. his ability of accommodation has been decreased; a power of accommodation exceeding the maximum value cannot be reached. Therefore, when a power of accommodation exceeding the maximum value is required, the power of accommodation is fixed at the maximum value of the eye. In this case, the image is blurred. When an object is observed by both eyes, the power of accommodation required for each of the right and lest eyes may be occasionally different depending on the difference in the distance to the object and the position of the lens at which the ray passes. However, in accordance with the ocular physiology, different accommodations cannot be performed for the right eye and the left eye. Therefore, in this case, it is necessary that the same optimum power of accommodation be set for both eyes.

### c. Deriving a monocular PSF

### A) Meaning of PSF

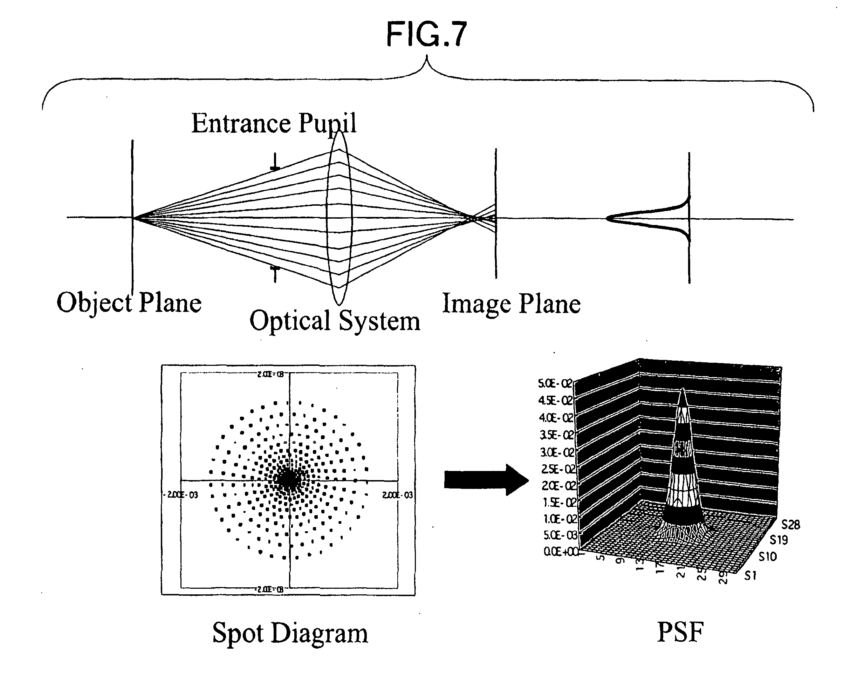

As shown in Figure 7, PSF is the function showing the concentration of a cluster of spots on the image plane of rays, which are emitted, from an object point. The function can be expressed as the distribution of the density of spots. In a perfect optical system, all spots are concentrated at the image point and the distribution of PSF becomes a straight line perpendicular to the image plane. However, in general, the distribution has a broader shape similar to the Gauss distribution.

### B) Method for deriving PSF

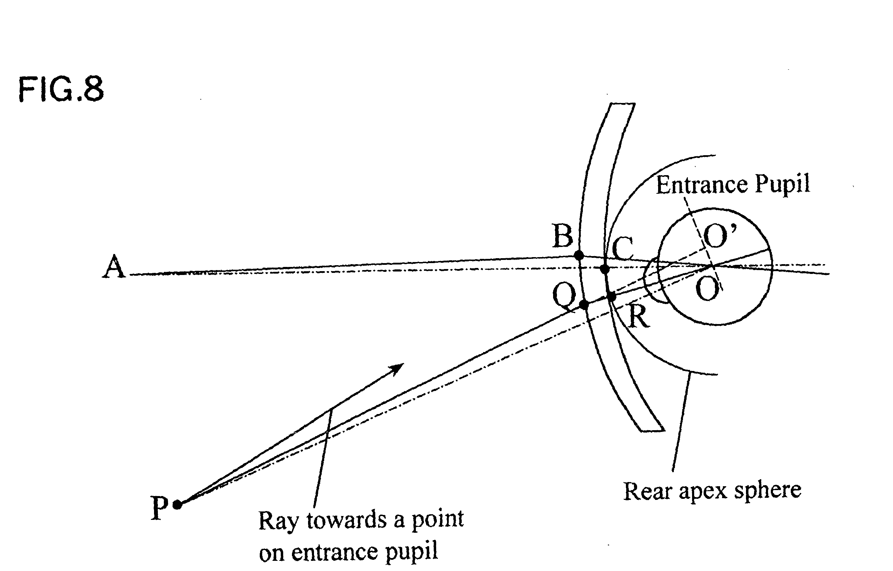

Figure 8 shows the composed optical system for deriving PSF when a point P is seen through a position Q on a spectacle lens. The ray emitted from the object point P is refracted at the point Q on the surface of the lens. The ray changes its direction at Q towards the center of monocular rotation O. To the eye, the object point P is seen as if the object point were located on the extension of the direction QO. As described above, when the point P is seen, the optical axis of the eyeball is rotated in the direction QO and the power of accommodation is set in accordance with the distance to the object point P and the refractive power at the point Q. The accommodation is performed based on the result. When the accommodation has been completed, the optical system is fixed and PSF can be derived.

As described above, PSF is the density of spots on the image plane of rays, which are emitted from an object point, pass through each of many points equally distributed on the entrance pupil. The entrance pupil, exactly, is located at the conjugative position of the iris pupil in the object side. However, the iris pupil changes its position while the eye is rotated, also its conjugative position in the object side moves dependent on the accommodation. On the other hand, the center of monocular rotation is placed at a fixed position and the distance to the conjugative point of the iris pupil is much smaller than the distance to the object point. Therefore, when no spectacle lens is place in front of an eye, it makes no problems to consider that the entrance pupil is located at the center of monocular rotation. When a spectacle lens is placed in front of the eye, the entrance pupil of the entire optical system should be located at the conjugative point of the center of monocular rotation via the spectacle lens. However, the position varies delicately when a progressive addition lens is used since the power is different depending upon the position of the lens at which the ray passes. Since the amount of the variation is much smaller than the distance to the object point, it can be assumed that the position of the entrance pupil is located at a point O' on the extension of the line PQ which satisfies PO=PO'.

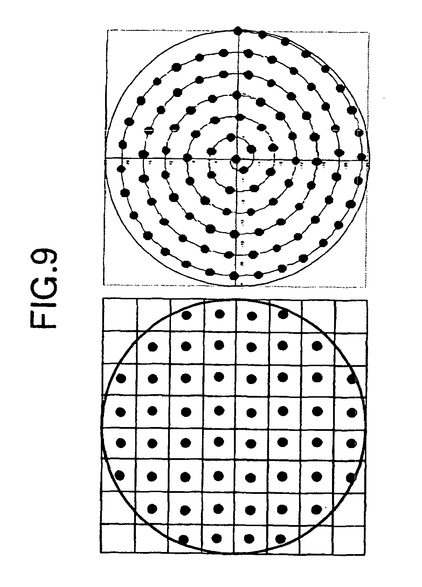

To obtain an accurate PSF, it is important that the entrance pupil is divided into many uniformly distributed small areas. There are two kinds of dividing methods of grid division and spiral division as shown in Fig.9. Although the grid division allows a good uniformity to be obtained, it allows to trace only about 70 % of predetermined rays because it has wasteful parts at four corners. Meanwhile, the spiral division causes no wasteful ray tracing while keeping the uniformity. Then, the spiral division is adopted in the present embodiment. As described above, PSF can be derived by tracing many rays which are emitted from the object point and pass through points obtained by uniformly splitting the entrance pupil and calculating the density of the spots on the retinal surface.

Although rays emitted from all object points and pass through all divided points of the entrance pupil must be traced to derive PSF with the method described above, the use of mathematical technique of spline interpolation allows the position of the spots on the retina to be calculated with less amount of calculation within a certain error range and PSF which is the density of spots on the surface of retina to be obtained. When the distorted original image and the PSF obtained in accordance with the above method are convoluted, blur, which is found when external things are observed through a spectacle lens, can be accurately reflected. However, deriving the PSF in accordance with the above method requires a long time for the calculation and is not convenient for conducting the quantitative analysis of the imaging performance of a lens. The quantitative analysis can be easily conducted by approximating the PSF to a suitable type of function and using the parameters of the function for the calculation. The method for approximating the PSF with a two-dimensional normal distribution function will be described in the following.

In the following two dimensional normal distribution function: $p ( μ , ν ) = \frac{1}{2 π {σ}_{μ} {σ}_{ν} \sqrt{1 - {ρ}^{2}}} exp ( - \frac{1}{2 ( 1 - {ρ}^{2} )} ( \frac{{μ}^{2}}{{σ}_{μ}^{2}} - 2 ρ \frac{μ ν}{{σ}_{μ} {σ}_{ν}} + \frac{{ν}^{2}}{{σ}_{ν}^{2}} ) )$
µ and ν represent the deviation in the vertical and horizontal directions, respectively, on the retina and σ_{µ},σ_{ν} and ρ represent parameters of a normal distribution. These parameters satisfy the following relations: $- 1 < ρ < 1$ ${σ}_{μ} > 0$ ${σ}_{ν} > 0$

The locus of the point at which the exponent in the above equation has the value of -1/2 is an ellipse expressed by: $\frac{{μ}^{2}}{{σ}_{μ}^{2}} + \frac{{ν}^{2}}{{σ}_{ν}^{2}} - \frac{2 ρ μ ν}{{σ}_{μ} {σ}_{ν}} = 1 - {ρ}^{2}$

The above ellipse can express the spreading range of PSF. The ratio of the length of the major axis to the length of the minor axis and the direction of the major axis of the ellipse are closely related to the degree and the direction of the astigmatism.

As for the method for obtaining the parameters of the two-dimensional normal distribution function from the ray data, the natural selection is the method in which statistical values of spots which are scattered on the image plane (each spot corresponding to each dividing point on the entrance pupil) are derived and the obtained values are used for the parameters. Thus, the values can be derived as follows:${σ}_{μ 0} = \sqrt{\frac{1}{N}} {\sum }_{i} {μ}_{i}^{2}$ ${σ}_{ν 0} = \sqrt{\frac{1}{N}} {\sum }_{i} {ν}_{i}^{2}$ $ρ = \frac{\frac{1}{N} {\sum }_{i} {μ}_{i} {ν}_{i}}{{σ}_{i} {σ}_{i}}$

In the above formulae, N represents the number of rays and (µ_{*i*},ν_{*i*}) represents the coordinates of a spot.

When σ_{µ0},σ_{ν0} and ρ are directly used as the parameters of the approximating normal distribution, there is the possibility that the result is different from the actual PSF depending on the condition of the distribution. In such as case, it is necessary that a suitable proportional constant k is selected and the parameters are adjusted as *σ*_{*µ*} = *kσ*_{*µ*0} and *σ*_{ν} = *kσ*_{ν0}. As described above, the parameters of the two-dimensional normal distribution function approximating the PSF can be derived by using the statistical values of ray spots on the retina.

It is occasionally convenient that the two-dimensional normal distribution function is expressed as a function of polar coordinates. By substituting µ = *r* cos θ and ν *= r* sinθ into the above equation and rearranging the resultant equation, the following equation can be obtained: $p ( r , θ ) = \frac{\sqrt{{A}^{2} - {B}^{2}}}{2 π} exp ( - \frac{{r}^{2}}{2} ( A - B cos ( 2 θ - 2 α ) ) )$

The parameters can be converted as follows: $A = \frac{1}{2 ( 1 - {ρ}^{2} )} ( \frac{1}{{σ}_{μ}^{2}} + \frac{1}{{σ}_{ν}^{2}} )$ $B = \frac{1}{2 ( 1 - {ρ}^{2} )} \sqrt{{( \frac{1}{{σ}_{μ}^{2}} - \frac{1}{{σ}_{ν}^{2}} )}^{2} + \frac{4 {ρ}^{2}}{{σ}_{μ}^{2} {σ}_{ν}^{2}}}$ $tan 2 α = \frac{2 ρ {σ}_{μ} {σ}_{ν}}{{σ}_{μ}^{2} - {σ}_{ν}^{2}}$

When the PSF is approximated with the two-dimensional normal distribution function and the parameters of the latter function are derived as described above, although it is necessary to carry out the ray tracing and statistic calculation to obtain parameters of the two-dimensional normal distribution function for all object points, the amount of calculation can be reduced while the calculative error can be controlled within a certain range using a mathematical method of spline interpolation.

### d. Derivation of a binocular PSF

The visual acuity with both eyes is generally said to be better than the visual acuity with a single eye. Therefore, the binocular PSF is expected to have a sharper shape than the right or left monocular PSF. In the present embodiment, uniting both right and left monocular PSFs in accordance with the following principles derives the binocular PSF:
1. When the monocular PSF for the right eye and the monocular PSF for the left eye are close to each other, the united PSF is of a distribution, which is more concentrated than each distribution of both monocular PSFs;
2. When the monocular PSF for the right eye and the monocular PSF for the left eye are different from each other in a great degree, the united PSF is of a distribution which is close to the most concentrated distribution between both monocular PSFs; and
3. Continuity and uniqueness of the united PSF are maintained.

As an example of the method for deriving the united binocular PSF from the right and left monocular PSF, the following method is proposed. PSF is approximated with a normal distribution function, which is represented by an ellipse: ${r}^{2} = \frac{1}{( A - B cos ( 2 θ - 2 α ) )}$

When the parameters of the ellipse representing the right monocular PSF are represented by *A*_{*R*},*B*_{*R*} and *α*_{*R*} and the parameters of the ellipse representing the left monocular PSF are represented by *A*_{*L*},*B*_{*L*} and *α*_{*L*}, the parameters *A,B* and α of the ellipse representing the united binocular PSF can be obtained as shown in the following: $\begin{matrix}\frac{1}{{r}^{2}} = \frac{1}{{r}_{R}^{2}} + \frac{1}{{r}_{L}^{2}} = {A}_{R} + {A}_{L} - ( {B}_{R} cos ( 2 θ - 2 {α}_{R} ) + {B}_{L} cos ( 2 θ - 2 {α}_{L} ) ) \\ = A - B cos ( 2 θ - 2 α )\end{matrix}$

The above equation leads to the following relations:$A = {A}_{R} + {A}_{L}$ $\begin{matrix}B = \sqrt{{B}_{R}^{2} + {B}_{L}^{2} + 2 {B}_{R} {B}_{L} cos 2 ( {α}_{R} - {α}_{L} )}\end{matrix}$$\begin{matrix}tan 2 a = \frac{{B}_{R} sin 2 {α}_{R} + {B}_{L} sin 2 {α}_{L}}{{B}_{R} cos 2 {α}_{R} + {B}_{L} cos 2 {α}_{L}}\end{matrix}$

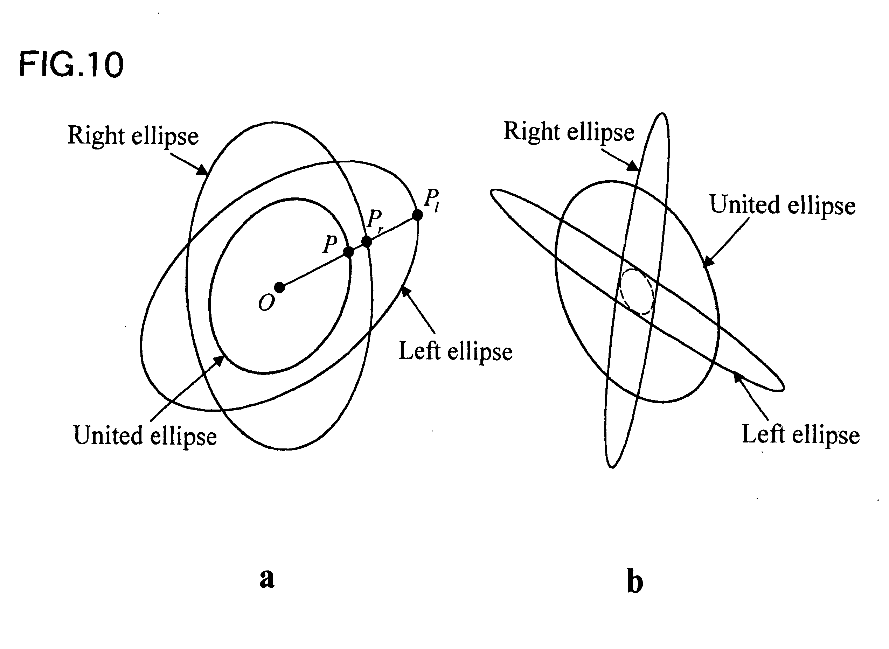

Figure 10a shows ellipses representing the right and left monocular PSF (the right and left ellipses, respectively) and an ellipse representing the united binocular PSF (the united ellipse). The above method is not applicable occasionally. In the case shown in Figure 10b, both eyes have great astigmatisms and the directions are different, the united binocular PSF distributes within an inadequately small area. Therefore, it is necessary to adjust the size of the united ellipse in accordance with the similarity of the right and left ellipses. For example, the adjustment is made by multiplying the area of the ellipse obtained above by a coefficient $k = \frac{2 {S}_{c}}{{S}_{R} + {S}_{L}} ,$ wherein κ is the ratio of the area of a common portion *S*_{*C*} of both right and left ellipse to the average of areas of both ellipses $\frac{{S}_{R} + {S}_{L}}{2} .$ The result of the adjustment can be expressed as: $A = κ ( {A}_{R} + {A}_{L} )$ $B = κ \sqrt{{B}_{R}^{2} + {B}_{L}^{2} + 2 {B}_{R} {B}_{L} cos 2 ( {α}_{R} - {α}_{L} )}$ $tan 2 a = \frac{{B}_{R} sin 2 {α}_{R} + {B}_{L} sin 2 {α}_{L}}{{B}_{R} cos 2 {α}_{R} + {B}_{L} cos 2 {α}_{L}}$

When the united binocular PSF is approximated with the two-dimensional normal distribution function and the parameters of the latter function are derived as described above, although it is necessary to derive parameters of each right and left monocular PSF and further the binocular PSF for all object points, the amount of calculation can be reduced while the calculative error can be controlled within a certain range using a mathematical method of spline interpolation.

### (5) Step of convolution

In this step, convolution of the distorted original image which is created in the step of creating a distorted original image and the united binocular PSFs derived in the step of deriving PSF is conducted and a binocular synkinetic rotation-based retinal image, which is an image of the virtual objects placed in the virtual three-dimensional space observed by the eyes at a specific position in a specific direction through specific positions on the spectacle lenses, is obtained.

The convolution is conducted, for example, in the following manner. When the distribution of the optical intensity of the distorted original image is represented by f(µ,ν) and PSF at a point (µ₀,ν₀) is represented by p(µ₀, ν₀, µ-µ₀, ν-ν₀), the optical intensity g(µ₀,ν₀) at a point (µ₀,ν₀) on the retina is expressed by the following equation: $g ( {μ}_{0} , {ν}_{0} ) = {\int }_{S} \int f ( μ , ν ) p ( {μ}_{0} , {ν}_{0} , μ - {μ}_{0} , ν - {ν}_{0} ) d μ d ν$

In the above equation, p(µ₀, ν₀, µ-µ₀, ν-ν₀) represents the value of PSF at the point at a distance of (µ-µ₀, ν-ν₀) from the point (µ₀,ν₀). S represents the range of spreading of PSF. By deriving the optical intensity at all points on the binocular synkinetic rotation-based retinal image in accordance with the above equation, a still binocular synkinetic rotation-based retinal image can be obtained.

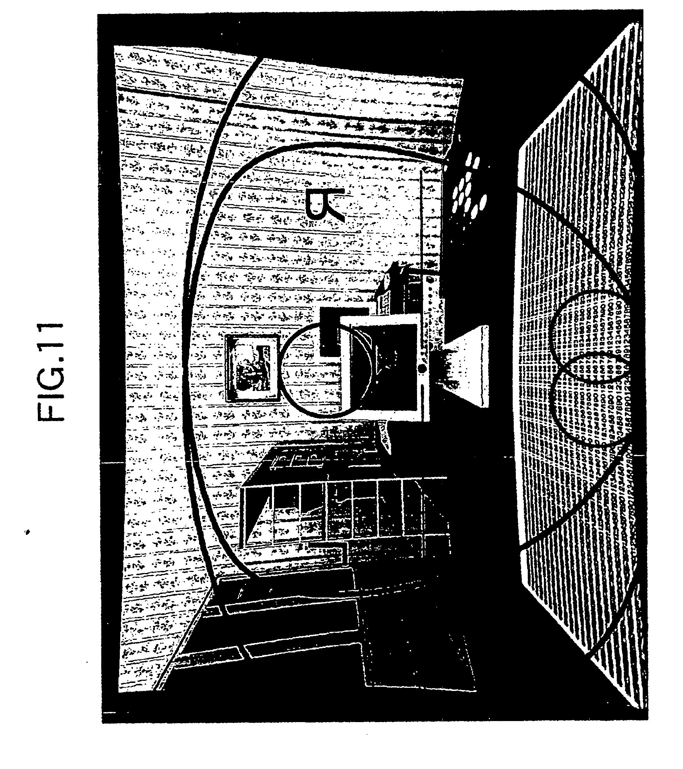

Figure 11 shows an example of the binocular synkinetic rotation-based retinal image derived in accordance with the method of Embodiment 1. In Figure 11, a binocular synkinetic rotation-based retinal image derived by observing a scenery in a room through progressive addition lenses of distant-vision power 0.00D with addition of 2.50 (HOYALUX SUMMIT, a trade name by HOYA Co. Ltd.) placed in front of both eyes, is shown. The visual field is 102.5° in the horizontal direction and 86.2° in the vertical direction. The spectacle frame had a size of a height of 40 mm and a width of 50 mm. The datum lines on the frames and the rings for measuring the distant-vision refractive power and the refractive near-vision power are shown. In this example, the positions of the rings for measuring the distant-vision refractive power in the right and left lenses are placed at positions overlapping with each other in the binocular synkinetic rotation-based retinal image. As the range of accommodation of the eye, 0.5D is used and the power of accommodation is set at the same value for both eyes.

In accordance with the method of the present embodiment, an image approximately reproducing blur and distortion perceived by observing objects through spectacle lenses such as progressive addition lenses, including the effect of binocular vision, is obtained. In other words, the entire visual field can be clearly perceived by the normal naked eyes and, on the other hand, some portions of the visual field are clearly seen and other portions of the visual field are seen with blur and distortion by eyes of presbyopia having progressive addition lenses placed in front of the eyes. In accordance with the method of the present embodiment, an image, which will be perceived by the eyes of presbyopia, can be reproduced as a virtual image. Therefore, by displaying the obtained image on a display apparatus, a designer who does not have eyes of presbyopia can confirm the perception, which would be derived through progressive addition lenses, designed by the designer if the designer were a person having eyes of presbyopia. Thus, the most desirable evaluation can be achieved. Moreover, since the perception can be confirmed before the progressive addition lenses are produced, freedom of customers in selecting lenses increases and mistakes can be decreased for a shop.

### (Embodiment 2)

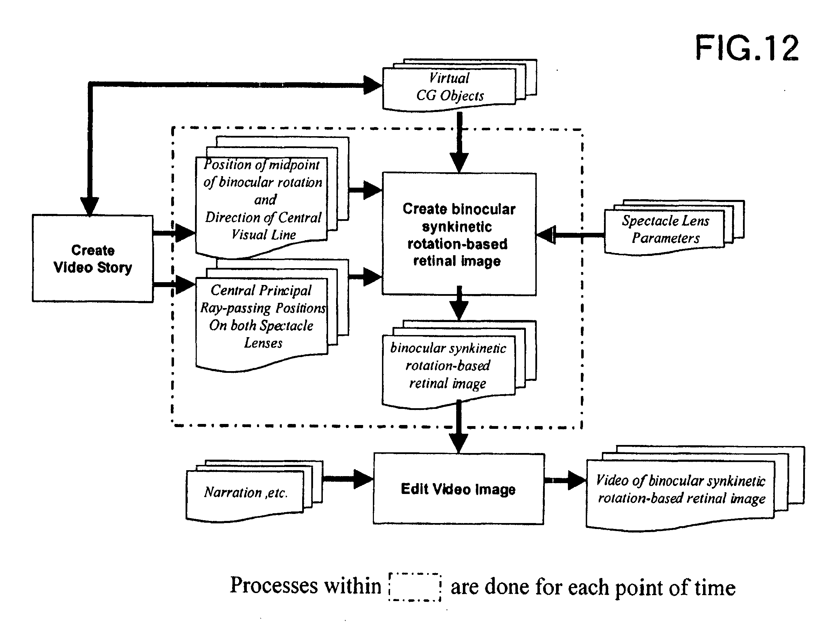

In the present embodiment, many still binocular synkinetic rotation-based retinal images such as those produced in Embodiment 1 are created at all points of time while the position of the midpoint of binocular rotation, the direction of the central visual line, both principal ray-passing positions on spectacle lenses, the amount of deformation and displacement of the virtual objects are changed. Therefore, the method of the present embodiment is essentially similar to the method of Embodiment 1 except that the method further comprises a step of creating a story of changes with time of the position of the midpoint of binocular rotation, the direction of the central visual line, both principal ray-passing positions on spectacle lenses, the amount of deformation and displacement of the virtual objects and a step of creating a video image by editing the still images at all points of the time. Figure 12 shows a diagram exhibiting the overall flow of the method. Detailed descriptions on each step are omitted. As the method for creating the story, smooth moving of the visual line can be achieved by using the spline interpolation method, not by deciding the position of the midpoint of binocular rotation, the direction of the central visual line, both principal ray-passing positions on spectacle lenses, the amount of deformation and displacement of the virtual objects individually at each point of all times.

In accordance with the above method of Embodiment 2, a video image which reproduces fluctuation caused by change in the position of the eyes and movement of the visual lines in addition to blur and distortion perceived by observing through spectacle lenses such as progressive addition lenseses, can be obtained. Therefore, when the obtained video image is displayed on a display apparatus, the evaluation can be achieved based on the vivid feeling as if the designer were actually a person wearing such spectacle glasses. When frame marks are displayed on the video image displayed on the display apparatus, blur, distortion and fluctuation can be observed while displacement of the visual lines on both spectacle lenses is confirmed.

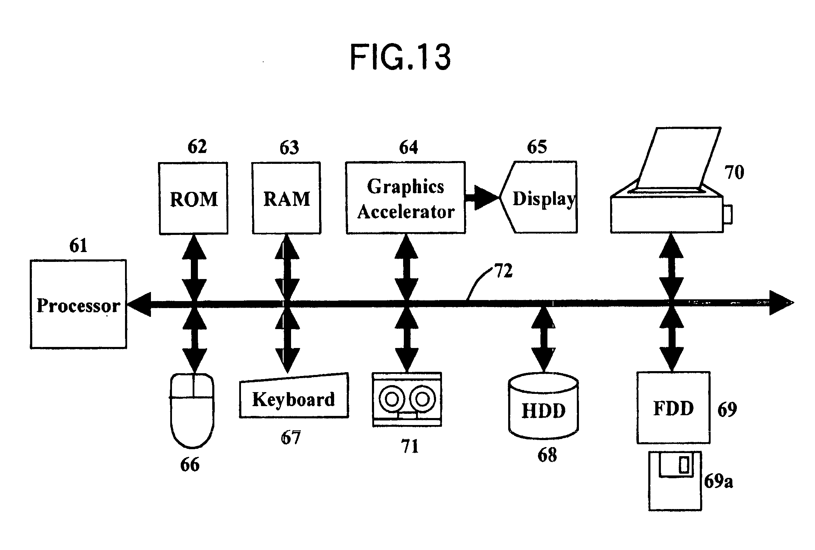

The apparatus for simulating in accordance with the methods described in the above Embodiments will be briefly described in the following. Figure 13 shows a block diagram exhibiting the construction of the apparatus for simulating an ocular optical system of the present invention. As shown in Figure 13, the apparatus is constituted with a processor 61, a read-only-memory (ROM) 62, a main memory 63, a graphic control circuit 64, a display apparatus 65, a mouse 66, a keyboard 67, a hard disk apparatus (HDD) 68, a floppy disk apparatus 69, a printer 70 and a magnetic tape apparatus 71. These elements are connected through a data bus 72.

The processor 61 is in charge of overall control of the entire apparatus. In the read-only-memory 62, programs necessary for starting up are contained. In the main memory 63, simulation programs used for conducting the simulation are contained. The graphic control circuit 64, which includes a video memory, converts data of an obtained image into signals for display and displays the image on the display apparatus 65. The mouse 66 is a pointing device for selecting icons and menus on the display apparatus. In the hard disk apparatus 68, system programs and simulation programs are stored and these programs are loaded to the main memory 63 after the electric power is supplied. Simulation data are also temporarily stored in the hard disk apparatus.

In the floppy disk apparatus 69, data necessary for simulation such as data of an original image are input into the memory or into the hard disk apparatus from a floppy disk 69A or, where necessary, saved into the floppy disk 69A. The magnetic tape apparatus 71 is used for saving simulation data into a magnetic tape, where necessary. As the apparatus having the above basic construction, a high performance personal computer or a general-purpose computer can be used.

### Effect of Invention

The advantages of the present invention are summarized as follows. As described above in detail, the method for simulating an ocular optical system and the apparatus therefor is characterized in that, as an image perceived by the eyes through the spectacle lenses, not an image projected on the retinal surfaces of eyes but a binocular synkinetic rotation-based retinal image created by computer simulation is used. The binocular synkinetic rotation-based retinal image is not an optical image projected on the retinal surfaces of eyes but an image defined as an image created as follows: each of right and left eyeballs is rotated in a visual field in a manner such that an object point is caught at the fovea of the retina of each eyeball; a united binocular foveal image of the object point is created by uniting both images projected on the right and left fevea; and the binocular synkinetic rotation-based retinal image is created by connecting united binocular foveal images with respect to all object point of the original image. The above method comprises a step of creating an original image comprising placing the midpoint of binocular rotation at a specific position and creating an original image as an image of the virtual objects within a visual field which is a specific pyramidal field; a step of creating a distorted original image comprising creating an original image having distortion which is perceived by observing through spectacle lenses in accordance with the ray tracing method; a step of deriving positions of spectacle frames comprising obtaining positions of spectacle frames in the distorted original image; a step of deriving PSF comprising deriving right and left monocular PSFs on the retina caused by light from object points of the original image and deriving binocular PSF by uniting the right and left monocular PSFs; a step of convolution comprising convoluting the distorted original image obtained in the step of creating a distorted original image and binocular PSFs obtained in the step of deriving PSF with respect to each of all object points representing pixels of the original image; and further, a step of creating a video image of the binocular synkinetic rotation-based retinal image by editing the binocular synkinetic rotation-based retinal images. As described above, the method and the apparatus, which enable simulating visual perception having blur and distortion, including the effect of using both eyes, in observing an object through spectacle lenses such as progressive addition lenseses, are provided.

## Claims

1. A method for simulating how things are seen when the outside world is observed through spectacle lenses placed in front of both right and left eyes, **characterized in that**
- a binocular foveal image, which is a united image of images projected at both left and right fovea when both eyes are rotated to catch an object point at their foveae, is defined as the perceived image with respect to the object point; and binocular foveal images with respect to all object points within the visual field are created by means of computer simulation,
wherein
- a binocular synkinetic rotation-based retinal image is defined as a mosaic of binocular foveal images with respect to all object points within the visual field and created by means of computer simulation,
wherein the step of creating a binocular synkinetic rotation-based retinal image comprises:
an original image creating step which comprises:
creating virtual objects made by computer graphics and placing them in a virtual three-dimensional space;
placing a midpoint of both centers of rotations at a specific position in the virtual three-dimensional space;
creating, as the original image, an image of those virtual objects within a visual field which is a range within a specific pyramid, whose apex is located at said midpoint of both centers of rotations and whose central axis is along a specific direction of visual line; and
measuring objective distances that are distances from all object points each corresponding to a pixel of said original image to said midpoint of both centers of rotations;
a distorted original image creating step which comprises:
defining a monocular principal ray for viewing an object point in the field of view through a spectacle lens placed in front of the eye as a ray emits from the object point and pass through a certain point on the spectacle lens heads toward the center of rotation, and a monocular direction of rotation as the direction of an output ray from the rear surface of the spectacle lens toward the center of rotation;
defining a direction of binocular synkinetic rotation to view an object point which is uniquely determined by both monocular directions of rotation of right and left eyes for viewing the object point;
deriving a central direction of binocular synkinetic rotation for viewing the object point in the center of the visual field by means of ray tracing, wherein each of both left and right monocular principal ray passes through each specific position,
defining an after-lens visual field as the visual field whose central axis is along the direction of binocular synkinetic rotation, and deriving for all object points each corresponding to a pixel of said original image, the directions of binocular synkinetic rotation and further the positions in said after-lens visual field
creating a distorted image which is an image of virtual objects in the after lens visual field and has distortion caused by the spectacle lenses; and
deriving for all object points each corresponding to a pixel of said original image, passing positions of both right and left monocular principal rays on each spectacle lens;
a spectacle frames position obtaining step which comprises creating images of spectacle frame marks which indicate positions of right and left spectacle frames on the original image or on the distorted original image by using data of the passing positions of right and left monocular principal rays on each spectacle lens which are obtained in the distorted image creating step;
a PSF deriving step of deriving monocular and binocular PSFs for all object points each corresponding to a pixel of the original image, for each object point it comprises:
introducing an accommodation-dependent ocular optical system model to each of both right and left eye ;
calculating distances between the object point and the centers of ocular rotation of right and left eyes using the objective distances obtained in the original image creating step;
setting powers of accommodation of both right and left eyes to same or different value in accordance with refractive powers of spectacle lenses at the passing positions of right and left monocular principal rays on each spectacle lens, which positions are derived in the distorted original image creating step;
deriving both monocular PSFs (Point spread functions) of right and left eye in each compositive optical system comprising the spectacle lenses and the accommodation-dependent ocular optical system model which is rotated in accordance with each monocular directions of rotation wherein PSF is a function which represents a distribution of luminance on each retina of each accommodation-dependent ocular optical system model due to the light emitted from an object point ; and deriving a binocular PSF uniting monocular PSFs of left and right eye; and
a convoluting step which comprises:
convoluting the distorted original image created in the distorted original image creating step and the binocular PSFs of all object points each corresponding to a pixel of the original image which are obtained in the PSF deriving step in order to;
create a binocular synkinetic rotation-based retinal image which is assumed in this invention to be the image of the virtual objects placed in the virtual three-dimensional space observed binocularly by eyes placed at specific positions whose central direction of binocular synkinetic rotation is along a specific directions and whose monocular principal rays pass through specific positions on the spectacle lenses; and
overlaying spectacle frame marks created in the spectacle frames position obtaining step on the binocular synkinetic rotation-based retinal image.

2. A method according to claim 1, wherein the said binocular foveal image and/or binocular synkinetic rotation-based retinal image is displayed on a display apparatus.

3. A method according to claim 1, comprising the steps of :
creating a story of changes in a time-series manner of the position of midpoint of both centers ocular rotation, the central direction of binocular synkinetic rotation, passing positions of both monocular principal rays on each spectacle lens, the amount of deformation and displacement of virtual objects;
creating a binocular synkinetic rotation-based retinal image at each point of time in accordance with the created story using the method described in claim 1; and
creating a video image of the binocular synkinetic rotation-based retinal image by editing the binocular synkinetic rotation-based retinal images at all points of time during the change.

4. A method according to any of claims 1 to 3, wherein, in the distorted original image creating step, the definition of the direction of binocular synkinetic rotation satisfies following principles:
1. A unique direction of binocular synkinetic rotation is determined by the monocular directions of rotation of right and left eye;
2. The direction of binocular synkinetic rotation continuously changes with changes in the monocular directions of rotation of right and left eye; and
3. Space feeling based on the direction of binocular synkinetic rotation is not much different from space feeling based on the monocular directions of rotation of right and left eye.

5. A method according to any of claims 1 to 4, wherein, in distorted original image creating step, the direction of binocular synkinetic rotation is defined as follows: $\overline{r} = \frac{k {\overline{r}}_{R} + ( 1 - k ) {\overline{r}}_{L}}{| k {\overline{r}}_{R} + ( 1 - k ) {\overline{r}}_{L} |}$
wherein $\overline{r}$ represents a unit vector in the direction of binocular synkinetic rotation, ${\overline{r}}_{R}$ and ${\overline{r}}_{L}$ represent unit vectors in the monocular directions of rotation of right and left eye, respectively, in Descartes coordinates and 0<k<1.

6. A method according to any of claims 1 to 5, wherein, in the PSF deriving step, while deriving the binocular PSF from both left and right monocular PSF for an object point corresponding to a pixel of the original image, following principles are satisfied:
1. When the right and left monocular PSFs are close to each other, the binocular PSF should be a more concentrated distribution than each monocular PSF;
2. When the right and left monocular PSFs are different from each other in a great degree, the binocular PSF is closer to one of the monocular PSFs which has a more concentrated distribution; and
3. Continuity and uniqueness of the binocular PSF are maintained.

7. A method according to any of claims 1 to 6, wherein, in the PSF deriving step, while deriving PSFs for an object point corresponding to a pixel of the original image, the left and right monocular PSFs are derived using the same method and each of both monocular PSF is optimally approximated to a two-dimensional normal distribution functions; and then the binocular PSF is approximated by a two-dimensional normal distribution function whose parameters are derived from those of the both left and right monocular PSFs in accordance with following procedures:
In polar coordinates, when the right monocular PSF is expressed as: ${p}_{R} ( r , θ ) = \frac{\sqrt{{A}_{R}^{2} - {B}_{R}^{2}}}{2 π} exp ( - \frac{{r}^{2}}{2} ( {A}_{R} - {B}_{R} cos ( 2 θ - 2 {α}_{R} ) ) )$
and the left monocular PSF is expressed as: ${p}_{L} ( r , θ ) = \frac{\sqrt{{A}_{L}^{2} - {B}_{L}^{2}}}{2 π} exp ( - \frac{{r}^{2}}{2} ( {A}_{L} - {B}_{L} cos ( 2 θ - 2 {α}_{L} ) ) ) ,$
the bionocular PSF, a united PSF by both monocular PSFs, is expressed as: $p ( r , θ ) = \frac{\sqrt{{A}^{2} - {B}^{2}}}{2 π} exp ( - \frac{{r}^{2}}{2} ( A - B cos ( 2 θ - 2 α ) ) )$
wherein the parameters A, B, α are expressed as: $A = κ ( {A}_{R} + {A}_{L} )$ $B = κ \sqrt{{B}_{R}^{2} + {B}_{L}^{2} + 2 {B}_{R} {B}_{L} cos 2 ( {α}_{R} - {α}_{L} )}$ $tan 2 a = \frac{{B}_{R} sin 2 {α}_{R} + {B}_{L} sin 2 {α}_{L}}{{B}_{R} cos 2 {α}_{R} + {B}_{L} cos 2 {α}_{L}}$
wherein κ is expressed as: $κ = \frac{2 {S}_{C}}{{S}_{R} + {S}_{L}}$
which is a ratio of an area of a common portion *S*_{*C*} of an ellipse representing the right monocular PSF expressed as:${r}^{2} ( {A}_{R} - {B}_{R} cos ( 2 θ - 2 {α}_{R} ) ) = 1$
and an ellipse representing the left monocular PSF expressed as: ${r}^{2} ( {A}_{L} - {B}_{L} cos ( 2 θ - 2 {α}_{L} ) ) = 1$
to an average of areas of both ellipses $\frac{1}{2} ( {S}_{R} + {S}_{L} ) .$

8. An apparatus for simulating how things are seen when the outside world is observed through spectacle lenses placed in front of both right and left eyes which comprises:
an apparatus for creating a binocular foveal image, which is a united image of images projected at both left and right fovea when both eyes are rotated to catch an object point at their foveas, for all object points in a visual field by means of computer simulation;
an apparatus for creating a binocular synkinetic rotation-based retinal image, which is defined as a mosaic of binocular foveal images with respect to all object points within the visual field, by means of computer simulation,; and
an apparatus for displaying binocular foveal image or binocular synkinetic rotation-based retinal image;
wherein said apparatus further comprises
a means for creating an original image which is used for:
creating virtual objects made by computer graphics and placing them in a virtual three-dimensional space;
placing a midpoint of both centers of rotations at a specific position in the virtual three-dimensional space, ;
creating, as the original image, an image of those virtual objects within a visual field which is a range within a specific pyramid , whose apex is located at said midpoint of both centers of rotations and whose central axis is along a specific direction of visual line; and
measuring objective distances that are distances from all object points each corresponding to a pixel of said original image to said midpoint of both centers of rotations;
a means for creating a distorted original image which is used for:
defining a monocular principal ray for viewing an object point in the field of view through a spectacle lens placed infront of the eye as a ray emits from the object point and pass through a certain point on the spectacle lens heads toward the center of rotation, and a monocular direction of rotation as the direction of an output ray from the rear surface of the spectacle lens toward the center of rotation;
defining a direction of binocular synkinetic rotation to view an object point which is uniquely determined by both monocular directions of rotation of right and left eyes for viewing the object point;
deriving a central direction of binocular synkinetic rotation for viewing the object point in the center of the visual field by means of ray tracing, wherein each of both left and right monocular principal ray passes through each specific position,
defining an after-lens visual field as the visual field whose central axis is along the direction of binocular synkinetic rotation, and deriving, for all object points each corresponding to a pixel of said original image, the directions of binocular synkinetic rotation and further the positions in said after-lens visual field;
creating a distorted image which is an image of virtual objects in the after lens visual field and has distortion caused by the spectacle lenses; and
deriving, for all object points each corresponding to a pixel of said original image, passing positions of both right and left monocular principal rays on each spectacle lens;
a means for deriving positions of spectacle frames which comprises creating images of spectacle frame marks which indicate positions of right and left spectacle frames on the original image or on the distorted original image by using data of the passing positions of right and left monocular principal rays on each spectacle lens which are derived by the means for creating a distorted original image;
a means for deriving PSF (point spread functions) which is used for deriving monocular and binocular PSFs for all object points each corresponding to a pixel of the original image. For each object point it comprises:
introducing an accommodation-dependent ocular optical system model to each of both right and left eye ;
calculating distances between the object point and the centers of ocular rotation of right and left eyes using the objective distances obtained by means for creating an original image;
setting powers of accommodation of both right and left eyes to same or different value in accordance with refractive powers of spectacle lenses at the passing positions of right and left monocular principal rays on each spectacle lens, which positions are derived by means for creating a distorted original image;
deriving both monocular PSFs (Point spread functions) of right and left eye in each compositive optical system comprising the spectacle lenses and the accommodation-dependent ocular optical system model which is rotated in accordance with each monocular directions of =rotation , wherein PSF is a function which represents a distribution of luminance on each retina of each accommodation-dependent ocular optical system model due to the light emitted from an object point; and
deriving a binocular PSF uniting monocular PSFs of left and right eye; and
a means for convolution which is used for:
convoluting the distorted original image created by means for creating a distorted original image and the binocular PSFs of all object points each corresponding to a pixel of the original image which are derived by means for deriving PSF in order to :
creating a binocular synkinetic rotation-based retinal image which is asumed to be the image of the virtual objects placed in the virtual three-dimensional space observed binocularly by eyes placed at specific positions whose central direction of binocular synkinetic rotation is along a specific directions and whose monocular principal rays pass through specific positions on the spectacle lenses; and
overlaying spectacle frame marks created in the spectacle frames position deriving step on the binocular synkinetic rotation-based retinal image.

9. An apparatus for simulating how things are seen when the outside world is observed through spectacle lenses placed in front of both right and left eyes according to claim 8, which comprises means for:
creating virtual objects made by computer graphics and placing them in a virtual three-dimensional space;
creating a story of changes in a time-series manner of the position of midpoint of both centers ocular rotation, the central direction of binocular synkinetic rotation, passing positions of both monocular principal rays on each spectacle lens, the amount of deformation and displacement of virtual objects ;
creating a binocular synkinetic rotation-based retinal image at each point of time in accordance with the created story using the method described in any of claims 4 and 5; and
creating a video image of the by editing the binocular synkinetic rotation-based retinal images of all points of time.

## Revendications

1. Procédé de simulation de la façon dont les choses sont vues lorsque le monde extérieur est observé à travers des verres de lunettes placés en face des yeux droit et gauche, **caractérisé en ce que**
une image fovéale binoculaire, qui est une image réunissant des images projetées sur les foveae gauche et droite lorsque les deux yeux tournent pour capter un point d'objet sur leurs foveae, est définie comme l'image perçue par rapport à ce point d'objet, et des images fovéales binoculaires par rapport à tous les points d'objets à l'intérieur du champ visuel sont créées par des moyens de simulation par ordinateur, dans lesquels
une image rétinienne basée sur une rotation syncinétique est définie comme une mosaïque d'images fovéales binoculaires par rapport à tous les points d'objets à l'intérieur du champ visuel, et créée par des moyens de simulation par ordinateur,
dans lequel l'étape de création d'une image rétinienne basée sur une rotation syncinétique binoculaire comprend :
une étape de création d'une image initiale, qui comprend :
la création d'objets visuels réalisés par infographie, et le placement de ces objets dans un espace tridimensionnel virtuel,
le placement d'un point milieu des deux centres de rotation en un emplacement spécifique de l'espace tridimensionnel virtuel ;
la création, comme image initiale, d'une image de ces objets virtuels à l'intérieur d'un champ visuel qui est une plage à l'intérieur d'une pyramide spécifique, dont l'apex est situé audit point milieu des deux centres de rotation et dont l'axe central suit une direction spécifique de ligne visuelle ; et
la mesure des distances objectives qui sont les distances depuis tous les points d'objets, chacun correspondant à un pixel de ladite image initiale, jusqu'au dit point milieu des deux centres de rotation ;
une étape de création d'une image distordue, qui comprend :
la définition d'un rayon principal monoculaire, pour la visualisation d'un point d'objet dans le champ de vision, à travers un verre de lunette placé en face de l'oeil, lorsqu'un rayon est émis depuis le point d'objet et passe à travers un certain point du verre de lunette en direction du centre de rotation, et d'une direction monoculaire de rotation comme la direction d'un rayon généré depuis la surface arrière du verre de lunette vers le centre de rotation ;
la définition d'une direction de rotation syncinétique binoculaire pour visualiser un point d'objet qui est déterminé spécifiquement par les deux directions binoculaires de rotation des yeux droit et gauche pour visualiser le point d'objet ;
la déduction d'une direction centrale de rotation syncinétique binoculaire pour la visualisation du point d'objet au centre du champ visuel par tracé d'un rayon, dans lequel chacun des deux rayons principaux monoculaires gauche et droit passe à travers chaque emplacement spécifique,
la définition d'un champ visuel depuis les verres de lunettes comme le champ visuel dont l'axe central suit la direction de rotation syncinétique binoculaire, et la déduction, pour tous les points d'objets dont chacun correspond à un pixel de ladite image initiale, des directions de rotation syncinétiques binoculaires puis des emplacements dans ledit champ visuel depuis les verres de lunettes ;
la création d'une image distordue, qui est une image des objets visuels dans le champ visuel depuis les verres de lunettes, et présente une distorsion causée par les verres de lunettes ; et
la déduction, pour tous les points d'objets dont chacun correspond à un pixel de ladite image initiale, des emplacements au passage des deux rayons principaux monoculaires droit et gauche sur chaque verre de lunette ;
une étape d'obtention d'emplacements de montures de lunettes, qui comprend la création d'images de repères de montures de lunettes indiquant les emplacements des montures de lunettes droite et gauche sur l'image initiale ou sur l'image initiale distordue, en utilisant les données des emplacements au passage des rayons principaux monoculaires droit et gauche sur chaque verre de lunette, obtenues durant l'étape de création de l'image distordue ;
une étape de déduction de fonction d'étalement ponctuel (PSF) consistant à déduire les PSF monoculaire et binoculaire de tous les points d'objets, chacun correspondant à un pixel de l'image initiale, pour chaque point d'objet qu'elle comprend ;
l'introduction d'un modèle de système optique oculaire, dépendant de l'accommodation dans chacun de l'oeil droit et de l'oeil gauche ;
le calcul des distances entre le point d'objet et les centres de rotation oculaires des yeux droit et gauche en utilisant les distances objectives obtenues durant l'étape de création de l'image initiale ;
la définition des possibilités d'accommodation des yeux droit et gauche à une valeur identique ou différente selon les possibilités de réfraction des verres de lunettes à des emplacements au passage des rayons principaux monoculaires droit et gauche sur chaque verre de lunette, lesquels emplacements sont déduits durant l'étape de création de l'image initiale ;
la déduction des deux fonctions d'étalement ponctuel (PSF) des yeux droit et gauche dans chaque système optique composite comprenant les verres de lunettes et le modèle de système optique oculaire dépendant de l'accommodation qui tourne selon chaque direction de rotation monoculaire, dans lequel la PSF est une fonction qui représente une distribution de la luminance, sur chaque rétine, de chaque modèle de système optique oculaire dépendant de l'accommodation, du fait de la lumière émise depuis un point d'objet ; et
la déduction d'une PSF binoculaire réunissant les PSF monoculaires des yeux gauche et droit ; et
une étape de convolution qui comprend :
la convolution de l'image initiale distordue créée durant l'étape de création de l'image initiale distordue et des PSF binoculaires de tous les points d'objets, chacun représentant un pixel de l'image initiale, qui sont obtenus durant l'étape de déduction de PSF, afin de :
créer une image rétinienne basée sur une rotation syncinétique binoculaire, qui est supposée dans la présente invention être l'image des objets virtuels placés dans l'espace tridimensionnel virtuel observé de façon binoculaire par les yeux placés à des emplacements spécifiques, dont la direction centrale de rotation syncinétique binoculaire suit des directions spécifiques et dont les rayons principaux monoculaires passent à travers des emplacements spécifiques des verres de lunettes ; et
superposer des repères de montures de lunettes, créés durant l'étape d'obtention d'emplacements de montures de lunettes, à l'image rétinienne basée sur une rotation syncinétique binoculaire.

2. Procédé selon la revendication 1, dans lequel ladite image fovéale binoculaire et/ou l'image rétinienne basée sur une rotation syncinétique binoculaire est affichée sur un dispositif d'affichage.

3. Procédé selon la revendication 1, comprenant les étapes de :
création d'un historique des changements, selon une séquence temporelle, de l'emplacement du point milieu des deux centres de rotation oculaire, de la direction centrale de rotation syncinétique binoculaire, des emplacements au passage des deux rayons principaux monoculaires sur chaque verre de lunette, et de la proportion de déformation et de déplacement des objets visuels ;
création d'une image rétinienne basée sur une rotation syncinétique binoculaire à chaque point du temps selon l'historique créé en utilisant le procédé décrit la revendication 1 ; et
création d'une image vidéo de l'image rétinienne basée sur une rotation syncinétique binoculaire par montage des images rétiniennes basées sur une rotation syncinétique à tous les points de temps durant le changement.

4. Procédé selon l'une quelconque des revendications 1 à 3, dans lequel, durant l'étape de création de l'image initiale distordue, la définition de la direction de rotation syncinétique binoculaire satisfait les principes suivants :
1) une direction spécifique de rotation syncinétique binoculaire est déterminée par les directions monoculaires de rotation des yeux droit et gauche ;
2) cette direction de rotation syncinétique binoculaire change continuellement avec les changements de direction de rotation monoculaire des yeux droit et gauche ; et
3) la sensation d'espace basée sur la direction de rotation syncinétique binoculaire n'est pas très différente de la sensation d'espace basée sur les directions de rotation monoculaires des yeux droit et gauche.

5. Procédé selon l'une quelconque des revendications 1 à 4, dans lequel, durant l'étape de création de l'image initiale distordue, la direction de rotation syncinétique binoculaire est définie comme suit : $\overline{r} = \frac{k {\overline{r}}_{R} + ( 1 - k ) {\overline{r}}_{L}}{| k {\overline{r}}_{R} + ( 1 - k ) {\overline{r}}_{L} |}$
$\overline{r}$ représentant un vecteur unitaire dans la direction de rotation syncinétique binoculaire, ${\overline{r}}_{R}$ et ${\overline{r}}_{L}$ représentant des vecteurs unitaires dans les directions de rotation monoculaires des yeux droit et gauche, respectivement, selon les coordonnées cartésiennes, et 0<k<1.

6. Procédé selon l'une quelconque des revendications 1 à 5, dans lequel, durant l'étape de déduction de la PSF, pendant la déduction de la PSF binoculaire des deux PSF monoculaires droite et gauche pour un point d'objet correspondant à un pixel de l'image initiale, les principes suivants sont satisfaits :
1) lorsque les PSF monoculaires droit et gauche sont proches l'une de l'autre, la PSF binoculaire doit avoir une distribution plus concentrée que chaque PSF monoculaire ;
2) lorsque les PSF monoculaires droite et gauche sont différentes l'une de l'autre à un degré important, la PSF binoculaire est plus proche de celle des PSF monoculaires qui a une distribution plus concentrée ; et
3) la continuité et la spécificité de la PSF binoculaire sont préservées.

7. Procédé selon l'une quelconque des revendications 1 à 6, dans lequel, durant l'étape de déduction de PSF, pendant la déduction des PSF pour un point d'objet correspondant à un pixel de l'image initiale, les PSF monoculaires gauche et droite sont déduites en utilisant le même procédé, et chacune des deux PSF monoculaires est calculée par approximation optimale de fonctions de distribution normale bidimensionnelle ; puis la PSF binoculaire est calculée par approximation d'une fonction de distribution normale bidimensionnelle dont les paramètres sont déduits de ceux des PSF monoculaires gauche et droite, selon les procédures suivantes :
en coordonnées polaires, lorsque la PSF monoculaire droite est exprimée par : ${p}_{R} ( r , θ ) = \frac{\sqrt{{A}_{R}^{2} - {B}_{R}^{2}}}{2 π} exp ( - \frac{{r}^{2}}{2} ( {A}_{R} - {B}_{R} cos ( 2 θ - 2 {α}_{R} ) ) )$
et la PSF monoculaire gauche est exprimée par : ${p}_{L} ( r , θ ) = \frac{\sqrt{{A}_{L}^{2} - {B}_{L}^{2}}}{2 π} exp ( - \frac{{r}^{2}}{2} ( {A}_{L} - {B}_{L} cos ( 2 θ - 2 {α}_{L} ) ) )$
la PSF binoculaire, qui est une PSF réunissant les deux PSF monoculaires, est exprimée par :$p ( r , θ ) = \frac{\sqrt{{A}^{2} - {B}^{2}}}{2 π} exp ( - \frac{{r}^{2}}{2} ( A - B cos ( 2 θ - 2 α ) ) )$
les paramètres A, B, α étant exprimés par : $A = κ ( {A}_{R} + {A}_{L} )$ $\begin{matrix}B = κ \sqrt{{B}_{R}^{2} + {B}_{L}^{2} + 2 {B}_{R} {B}_{L} cos 2 ( {α}_{R} - {α}_{L} )}\end{matrix}$$\begin{matrix}tan 2 α = \frac{{B}_{R} sin 2 {α}_{R} + {B}_{L} sin 2 {α}_{L}}{{B}_{R} cos 2 {α}_{R} + {B}_{L} cos 2 {α}_{L}}\end{matrix}$
K étant exprimé par : $κ = \frac{2 {S}_{C}}{{S}_{R} + {S}_{L}}$
qui est un rapport d'une surface d'une partie commune S_{c} d'une ellipse représentant la PSF monoculaire droite exprimée par : ${r}^{2} ( {A}_{R} - {B}_{R} cos ( 2 θ - 2 {α}_{R} ) ) = 1$
et d'une ellipse représentant la PSF monoculaire gauche exprimée par : ${r}^{2} ( {A}_{L} - {B}_{L} cos ( 2 θ - 2 {α}_{L} ) ) = 1$
sur une moyenne des surfaces des deux ellipses $\frac{1}{2} ( {S}_{R} + {S}_{L} )$

8. Dispositif de simulation de la façon dont les choses sont vues lorsque le monde extérieur est observé à travers des verres de lunettes placés en face des yeux droit et gauche, qui comprend :
un dispositif de création d'une image fovéale binoculaire, qui une image réunissant les images projetées sur les foveae droite et gauche lors de la rotation des deux yeux pour capter un point d'objet sur leurs foveae, pour tous les points d'objets dans un champ visuel, par simulation par ordinateur ;
un dispositif de création d'une image rétinienne basée sur une rotation syncinétique binoculaire comme une mosaïque d'images fovéales binoculaires par rapport à tous les points d'objets à l'intérieur du champ visuel, par simulation par ordinateur ; et
un dispositif d'affichage d'une image fovéale binoculaire ou d'une image rétinienne basée sur une rotation syncinétique binoculaire ;
dans lequel ledit dispositif comprend en outre :
des moyens pour créer une image initiale qui est utilisée pour :
la création d'objets visuels réalisés par infographie et le placement de ces objets dans un espace tridimensionnel virtuel ;
le placement d'un point milieu des deux centres de rotation en un emplacement spécifique dans l'espace tridimensionnel virtuel ;
la création, comme image initiale, d'une image de ces objets virtuels dans un champ visuel qui est une place à l'intérieur d'une pyramide spécifique, dont l'apex est situé audit point milieu des deux centres de rotation et dont l'axe central suit une direction spécifique de ligne visuelle ; et
la mesure des distances objectives qui sont les distances à partir de tous les points d'objets, chacune correspondant à un pixel de ladite image initiale, jusqu'au dit point milieu des deux centres de rotation ;
des moyens pour créer une image initiale qui est utilisée pour :
la définition d'un rayon principal monoculaire pour la visualisation d'un point d'objet dans le champ de vision à travers un verre de lunette placé en face de l'oeil, lorsqu'un rayon est émis depuis le point d'objet et passe à travers un certain point du verre de lunette en direction du centre de rotation, et d'une direction monoculaire de rotation comme la direction d'un rayon généré depuis la surface arrière du verre de lunette vers le centre de rotation ;
la définition d'une direction de rotation syncinétique binoculaire pour visualiser un point d'objet qui est déterminé spécifiquement par les deux directions binoculaires de rotation des yeux droit et gauche pour visualiser le point d'objet ;
la déduction d'une direction centrale de rotation syncinétique binoculaire pour la visualisation du point d'objet au centre du champ visuel par tracé d'un rayon, dans lequel chacun des deux rayons principaux monoculaires gauche et droit passe à travers chaque emplacement spécifique ;
la définition d'un champ visuel depuis les verres de lunettes comme le champ visuel dont l'axe central suit la direction de rotation syncinétique binoculaire, et la déduction, pour tous les points d'objets dont chacun correspond à un pixel de ladite image initiale, des directions de rotation syncinétiques binoculaires puis des emplacements dans ledit champ visuel depuis les verres de lunettes ;
la création d'une image distordue, qui est une image des objets visuels dans le champ visuel depuis les verres de lunettes, et présente une distorsion causée par les verres de lunettes ; et
la déduction, pour tous les points d'objets dont chacun correspond à un pixel de ladite image initiale, des emplacements au passage des deux rayons principaux monoculaires droit et gauche sur chaque verre de lunette ;
des moyens pour déduire les emplacements des montures de lunettes, qui comprennent la création d'images de repères de montures de lunettes qui indiquent les emplacements des montures de lunettes droite et gauche sur l'image initiale ou sur l'image initiale distordue en utilisant les données des emplacements au passage des rayons principaux monoculaires droit et gauche sur chaque verre de lunette qui sont déduites par les moyens de création d'une image initiale distordue ;
des moyens de déduction de fonctions d'étalement ponctuel (PSF) qui sont utilisés pour déduire les PSF binoculaire et monoculaire de tous les points d'objets, chacun correspondant à un pixel de l'image initiale. Pour chaque point d'objet, ceci comprend :
l'introduction d'un modèle de système optique oculaire dépendant de l'accommodation dans chacun de l'oeil droit et de l'oeil gauche ;
le calcul des distances entre le point d'objet et les centres de rotation oculaires des yeux droit et gauche en utilisant les distances objectives obtenues par le biais de moyens de création d'une image initiale ;
la définition des possibilités d'accommodation des yeux droit et gauche à une valeur identique ou différente selon les possibilités de réfraction des verres de lunettes à des emplacements au passage des rayons principaux monoculaires droit et gauche sur chaque verre de lunette, lesquels emplacements sont déduits par le biais de moyens de création d'une image initiale distordue ;
la déduction des deux fonctions d'étalement ponctuel (PSF) monoculaires des yeux droit et gauche dans chaque système optique composite comprenant les verres de lunettes et le modèle de système optique oculaire dépendant de l'accommodation qui tourne selon chaque direction de rotation monoculaire, dans lequel la PSF est une fonction qui représente une distribution de la luminance, sur chaque rétine, de chaque modèle de système optique oculaire dépendant de l'accommodation, du fait de la lumière émise depuis un point d'objet ; et
la déduction d'une PSF binoculaire réunissant les PSF monoculaires des yeux gauche et droit ; et
des moyens de convolution qui sont utilisés pour :
la convolution de l'image initiale distordue, créée par les moyens de création d'une image initiale distordue, et des PSF binoculaires de tous les points d'objets, chacun correspondant à un pixel de l'image initiale, qui sont déduits par les moyens de déduction de PSF, afin de :
créer une image rétinienne basée sur une rotation syncinétique qui est supposée être l'image des objets virtuels placés dans l'espace tridimensionnel virtuel observé de façon binoculaire par les yeux placés à des emplacements spécifiques, dont la direction centrale de rotation syncinétique binoculaire suit des directions spécifiques et dont les rayons principaux monoculaires passent à travers des emplacements spécifiques des verres de lunettes ; et
superposer des repères de montures de lunettes, créés durant l'étape d'obtention d'emplacement de monture de lunette, à l'image rétinienne basée sur une rotation syncinétique binoculaire.

9. Dispositif de simulation de la façon dont les choses sont vues lorsque le monde extérieur est observé à travers des verres de lunettes placés en face des yeux droit et gauche selon la revendication 8, qui comprend des moyens de :
création d'objets visuels réalisés par infographie et de placement de ces objets dans un espace tridimensionnel virtuel ;
création d'un historique des changements, selon une séquence temporelle, de l'emplacement du point milieu des deux centres de rotation oculaire, de la direction centrale de rotation syncinétique binoculaire, des emplacements au passage des deux rayons principaux monoculaires sur chaque verre de lunette, et de la proportion de déformation et de déplacement des objets visuels ;
création d'une image rétinienne basée sur une rotation syncinétique binoculaire à chaque point de temps selon l'image créée en utilisant le procédé décrit dans chacune des revendications 4 et 5 ; et
création d'une image vidéo par montage des images rétiniennes basées sur une rotation syncinétique binoculaire à tous les points de temps.

## Patentansprüche

1. Verfahren zum Simulieren, wie Dinge gesehen werden, wenn die Außenwelt durch Brillenglaslinsen betrachtet wird, die vor sowohl dem rechten als auch dem linken Auge plaziert sind, **dadurch gekennzeichnet, daß**:
- ein binokulares foveales Bild, bei dem es sich um ein vereintes Bild von Bildern handelt, die an sowohl der linken als auch der rechten Fovea projiziert werden, wenn beide Augen gedreht werden, um einen Objektpunkt an ihrer Fovea einzufangen, als das wahrgenommene Bild in bezug auf den Objektpunkt definiert ist; und binokulare foveale Bilder in bezug auf alle Objektpunkte innerhalb des Gesichtsbildes mittels einer Computersimulation erzeugt werden, wobei
- ein binokulares, synkinetisches, rotationsbasiertes Netzhautbild als ein Mosaik von binokularen fovealen Bildern in bezug auf alle Objektpunkte innerhalb des Gesichtsfeldes definiert ist und mittels einer Computersimulation erzeugt wird,
wobei der Schritt zum Erzeugen eines binokularen, synkinetischen, rotationsbasierten Netzhautbildes folgende Schritte aufweist:
einen Schritt zum Erzeugen eines Ursprungsbildes, der folgende Schritte aufweist:
Erzeugen von virtuellen Objekten, die durch Computergraphik erstellt werden, und Plazieren derselben in einen virtuellen, dreidimensionalen Raum;
Plazieren einer Mitte von beiden Drehpunkten an einer spezifischen Position in dem virtuellen, dreidimensionalen Raum;
Erzeugen, als das Ursprungsbild, eines Bildes von diesen virtuellen Objekten innerhalb eines Gesichtsfeldes, bei dem es sich um einen Bereich innerhalb einer spezifischen Pyramide handelt, deren Spitze sich an der Mitte von beiden Drehpunkten befindet und deren zentrale Achse entlang einer spezifischen Richtung einer Sehlinie verläuft; und
Messen von Objektivabständen, bei denen es sich um Abstände von allen Objektpunkten, die jeweils einem Pixel des Ursprungsbildes entsprechen, zu der Mitte von beiden Drehpunkten handelt;
ein Schritt zum Erzeugen eines verzerrten Ursprungsbildes, der folgende Schritte aufweist:
Definieren eines monokularen Hauptstrahls zum Betrachten eines Objektpunktes in dem Sichtfeld durch eine Brillenglaslinse, die vor dem Auge plaziert ist, während ein Strahl von dem Objektpunkt emittiert wird und durch einen bestimmten Punkt auf der Brillenglaslinse hin zum Drehpunkt gelangt, und einer monokularen Richtung der Drehung als die Richtung eines ausgegebenen Strahls von der hinteren Oberfläche der Brillenglaslinse hin zum Drehpunkt;
Definieren einer Richtung einer binokularen, synkinetischen Drehung zum Betrachten eines Objektpunkts, die durch die beiden monokularen Richtungen der Drehung des rechten und des linken Auges zum Betrachten des Objektpunkts eindeutig bestimmt wird;
Ableiten einer zentralen Richtung der binokularen, synkinetischen Drehung zum Betrachten des Objektpunkts in der Mitte des Gesichtsfeldes mittels Strahlverfolgung, wobei jeweils ein linker und ein rechter monokularer Hauptstrahl durch jeweils eine spezifische Position gelangt,
Definieren eines Nach-Linse-Gesichtsfeldes als des Gesichtsfeld, dessen zentrale Achse entlang der Richtung einer binokularen, synkinetischen Drehung verläuft, und Ableiten für alle Objektpunkte, die jeweils einem Pixel des Ursprungsbildes entsprechen, der Richtungen der binokularen, synkinetischen Drehung und ferner der Positionen in dem Nach-Linse-Gesichtsfeld
Erzeugen eines verzerrten Bildes, bei dem es sich um ein Bild von virtuellen Objekten in dem Nach-Linse-Gesichtsfeld handelt und das eine Verzerrung aufweist, die durch die Brillenglaslinsen bewirkt wird; und
Ableiten für alle Objektpunkte, die jeweils einem Pixel des Ursprungsbildes entsprechen, von Paßpositionen von sowohl dem rechten als auch dem linken monokularen Hauptstrahl auf einer jeweiligen Brillenglaslinse;
einen Schritt zum Erhalten einer Brillenglas-Frames-Position, der ein Erzeugen von Bildern von Brillenglas-Frame-Markierungen aufweist, die Positionen des rechten und des linken Brillenglas-Frame auf dem Ursprungsbild oder auf dem verzerrten Ursprungsbild anzeigen, indem Daten der Paßpositionen der rechten und der linken monokularen Hauptstrahlen auf jeweils einer Brillenglaslinse verwendet werden, die in dem Schritt zum Erzeugen eines verzerrten Bildes erhalten werden;
einen Schritt zum Ableiten einer PSF zum Ableiten von monokularen und binokularen PSFs für alle Objektpunkte, die jeweils einem Pixel des Ursprungsbildes entsprechen, der für jeden Punkt folgende Schritte aufweist:
Einführen eines akkommodationsabhängigen okular-optischen Systemmodels in sowohl jeweils das rechte als auch das linke Auge;
Berechnen von Abständen zwischen dem Objektpunkt und den okularen Drehpunkten des rechten und des linken Auges unter Verwendung der Objektabstände, die in dem Schritt zum Erzeugen eines Ursprungsbildes erhalten werden;
Einstellen von Akkommodationskräften von sowohl dem rechten als auch dem linke Auge auf den gleichen oder einen anderen Wert gemäß den Brechkräften der Brillenglaslinsen an den Paßpositionen des rechten und des linken monokularen Hauptstrahls auf jeweils einer Brillenglaslinse, wobei die Positionen in dem Schritt zum Erzeugen eines verzerrten Ursprungsbildes abgeleitet werden;
Ableiten von beiden monokularen PSFs (Punktstreufunktionen) des rechten und des linken Auges in jeweils einem zusammengesetzten optischen System, das die Brillenglaslinsen und das akkommodationsabhängige okular-optische Systemmodell aufweist, das gemäß jeder monokularen Drehrichtung gedreht wird, wobei eine PSF eine Funktion ist, die eine Verteilung der Helligkeit auf jeder Netzhaut eines jeweiligen akkommodationsabhängigen okular-optischen Systemmodells aufgrund des Lichts darstellt, das von einem Objektpunkt emittiert wird; und
Ableiten einer binokularen PSF, die die monokularen PSFs des rechten und des linken Auges vereint; und
einen Faltungsschritt, der folgende Schritte aufweist:
Falten des verzerrten Ursprungsbildes, das in dem Schritt zum Erzeugen des verzerrten Ursprungsbildes erzeugt wird, und der binokularen PSFs von allen Objektpunkten, die jeweils einem Pixel des Ursprungsbildes entsprechen, die in dem Schritt zum Ableiten einer PSF erhalten werden, um;
ein binokulares, synkinetisches, rotationsbasiertes Netzhautbild zu erzeugen, von dem bei der vorliegenden Erfindung ausgegangen wird, daß es das Bild der virtuellen Objekte ist, die in dem virtuellen dreidimensionalen Raum plaziert sind, der binokular durch Augen betrachtet wird, die an spezifischen Positionen plaziert sind, deren zentrale Richtung der binokularen, synkinetischen Drehung entlang einer spezifischen Richtung verläuft und deren monokularen Hauptstrahlen durch spezifische Positionen auf den Brillenglaslinsen gelangen; und
Überlagern von Brillenglas-Frame-Markierungen, die in dem Schritt zum Erhalten von Brillenglas-Frame-Positionen erzeugt werden, auf dem binokularen, synkinetischen, rotationsbasierten Netzhautbild.

2. Verfahren nach Anspruch 1, wobei das binokulare foveale Bild und/oder binokulare, synkinetische, rotationsbasierte Netzhautbild auf einer Anzeigevorrichtung angezeigt wird.

3. Verfahren nach Anspruch 1, das folgende Schritte aufweist:
Erzeugen eines Berichts von Veränderungen in einer zeitlichen Abfolge der Position der Mitte von beiden okularen Drehpunkten, der zentralen Richtung der binokularen, synkinetischen Drehung, der Paßpositionen von beiden monokularen Hauptstrahlen auf jeweils einer Brillenglaslinse, des Betrags der Verformung und der Verschiebung von virtuellen Objekten;
Erzeugen eines binokularen, synkinetischen, rotationsbasierten Netzhautbildes an jeweils einem Zeitpunkt gemäß dem erzeugten Bericht unter Verwendung des in Anspruch 1 beschriebenen Verfahrens; und
Erzeugen eines Videobildes des binokularen, synkinetischen rotationsbasierten Netzhautbildes durch Bearbeiten der binokularen, synkinetischen, rotationsbasierten Netzhautbilder zu allen Zeitpunkten während der Veränderung.

4. Verfahren nach einem der Ansprüche 1 bis 3, wobei, in dem Schritt zum Erzeugen des verzerrten Ursprungsbildes, die Definition der Richtung der binokularen synkinetischen Drehung nachstehend Grundsätze erfüllt:
1. Eine eindeutige Richtung der binokularen, synkinetischen Drehung wird durch die monokularen Richtungen der Drehung des rechten und des linken Auges bestimmt;
2. Die Richtung der binokularen, synkinetischen Drehung ändert sich kontinuierlich mit den Veränderungen der monokularen Richtungen der Drehung des rechten und des linken Auges; und
3. Ein auf der Richtung der binokularen, synkinetischen Drehung basiertes Raumgefühl unterscheidet sich nicht so stark von dem auf den monokularen Drehrichtungen des rechten und des linken Auges basierten Raumgefühls.

5. Verfahren nach einem der Ansprüche 1 bis 4, wobei, in dem Schritt zum Erzeugen eines verzerrten Ursprungsbildes, die Richtung einer binokularen, synkinetischen Drehung wie folgt definiert ist: $\overline{r} = \frac{k \overline{{r}_{R}} + ( 1 - k ) {\overline{r}}_{L}}{| k {\overline{r}}_{R} + ( 1 - k ) \overline{{r}_{L}}}$
wobei *r* einen Einheitsvektor in der Richtung einer binokularen, synkinetischen Drehung darstellt, ${\overline{r}}_{R}$ und $\overline{{r}_{L}}$Einheitsvektoren in den monokularen Drehrichtungen des jeweils rechten und linken Auges in Descartes-Koordinaten darstellen und 0<k<1.

6. Verfahren nach einem der Ansprüche 1 bis 5, wobei, bei dem Schritt zum Ableiten einer PSF, während des Ableitens der binokularen PSF von der linken und der rechten monokularen PSF für einen Objektpunkt, der einem Pixel des Ursprungsbildes entspricht, folgende Grundsätze erfüllt werden:
1. Wenn die rechte und die linke PSF nahe beieinander sind, sollte die binokulare PSF eine konzentrierter Verteilung als jeweils eine monokulare PSF sein;
2. Wenn die rechte und die linke monokulare PSF sich voneinander in hohem Maße unterscheiden, ist die binokulare PSF näher zu einer der monokularen PSFs, die eine konzentriertere Verteilung aufweist; und
3. Kontinuität und Eindeutigkeit der binokularen PSF bleiben erhalten.

7. Verfahren nach einem der Ansprüche 1 bis 6, wobei, bei dem Schritt zum Ableiten der PSF, während des Ableitens von PSFs für einen Objektpunkt, der einem Pixel des Ursprungsbildes entspricht, die linke und die rechte monokulare PSF unter Verwendung des gleichen Verfahrens abgeleitet werden und jede der beiden monokularen PSFs einer zweidimensionalen Normalverteilungsfunktion optimal angenähert wird; und dann die binokularen PSF durch eine zweidimensionale Normalverteilungsfunktion genähert werden, deren Parameter von jenen der sowohl linken als auch rechten monokularen PSF gemäß der nachstehenden Vorgehensweise abgeleitet werden:
Bei Polarkoordinaten, wenn die rechte monokulare PSF ausgedrückt wird als: ${p}_{R} ( r , θ ) = \frac{\sqrt{{A}_{R}^{2}} - {B}_{R}^{2}}{2 π} exp ( - \frac{{r}^{2}}{2} ( {A}_{R} - {B}_{R} cos ( 2 θ - 2 {α}_{R} ) ) )$
und die monokulare PSF für das linke Auge ausgedrückt wird als: ${p}_{L} ( r , θ ) = \frac{\sqrt{{A}_{L}^{2}} - {B}_{L}^{2}}{2 π} exp ( - \frac{{r}^{2}}{2} ( {A}_{L} - {B}_{L} cos ( 2 θ - 2 α ) ) ) ,$
dann wird die binokulare PSF, die durch die beiden monokularen PSFs vereint wird, ausgedrückt als: $p ( r , θ ) = \frac{\sqrt{{A}^{2}} - {B}^{2}}{2 π} exp ( - \frac{{r}^{2}}{2} ( A - B cos ( 2 θ - 2 α ) ) )$
wobei die Parameter A, B, α der vereinten binokularen PSF ausgedrückt werden als: $A = κ ( {A}_{R} + {A}_{L} )$ $B = κ \sqrt{{B}_{R}^{2} + {B}_{L}^{2} + 2 {B}_{R} {B}_{L} cos 2 ( {α}_{R} - {α}_{L} )}$ $tan 2 α = \frac{{B}_{R} sin 2 {α}_{R} + {B}_{L} sin 2 {α}_{L}}{{B}_{R} cos 2 {α}_{R} + {B}_{L} cos 2 {α}_{L}} ,$
wobei κ ausgedrückt wird als: $κ = \frac{2 {S}_{C}}{{S}_{R} + {S}_{L}}$
bei dem es sich um ein Verhältnis eines Bereichs eines gemeinsamen Abschnitts S_{C} einer Ellipse handelt, die die rechte monokulare PSF darstellt, die ausgedrückt wird als: ${r}^{2} ( {A}_{R} - {B}_{R} cos ( 2 θ - 2 {a}_{R} ) ) = 1$
und eine Ellipse, die die linke monokulare PSF darstellt, die ausgedrückt wird als: ${r}^{2} ( {A}_{L} - {B}_{L} cos ( 2 θ - 2 {a}_{L} ) ) = 1$
zu einem Durchschnitt von Bereichen von beiden Ellipsen $\frac{1}{2} ( {S}_{R} + {S}_{L} ) .$

8. Vorrichtung zum Simulieren, wie Dinge gesehen werden, wenn die Außenwelt durch Brillenglaslinsen betrachtet wird,, die vor sowohl dem rechten als auch dem linken Auge plaziert sind, die folgende Merkmale aufweist:
eine Vorrichtung zum Erzeugen eines binokularen, fovealen Bildes, bei dem es sich um ein vereintes Bild von Bildern handelt, die sowohl an der linken als auch der rechten Fovea projiziert werden, wenn beide Augen gedreht werden, um einen Objektpunkt an deren Fovea einzufangen, für alle Objektpunkte in einem Gesichtsfeld mittels Computersimulation;
eine Vorrichtung zum Erzeugen eines binokularen, synkinetischen, rotationsbasierten Netzhautbildes, das als ein Mosaik von binokularen fovealen Bildern in bezug auf alle Objektpunkte innerhalb eines Gesichtsfeldes definiert ist, mittels einer Computersimulation; und
eine Vorrichtung zum Anzeigen eines binokularen, fovealen Bildes oder eines binokularen synkinetischen rotationsbasierten Netzhautbildes;
wobei die Vorrichtung ferner folgende Merkmale aufweist:
eine Einrichtung zum Erzeugen eines Ursprungsbildes, das verwendet wird zum:
Erzeugen von virtuellen Objekten, die durch Computergraphiken erstellt werden, und Plazieren derselben in einen virtuellen, dreidimensionalen Raum;
Plazieren einer Mitte von beiden Drehpunkten an einer spezifischen Position in dem virtuellen, dreidimensionalen Raum;
Erzeugen, als das Ursprungsbild, eines Bildes von dessen virtuellen Objekten innerhalb eines Gesichtsfeldes, bei dem es sich um einen Bereich innerhalb einer spezifischen Pyramide handelt, deren Spitze sich an der Mitte von beiden Drehpunkten befindet und deren zentrale Achse entlang einer spezifischen Richtung der Sehlinie verläuft; und
Messen von Objektivabständen, bei denen es sich um Abstände von allen Objektpunkten, die jeweils einem Pixel des Ursprungsbildes entsprechen, zu der Mitte von beiden Drehpunkten handelt;
eine Einrichtung zum Erzeugen eines verzerrten Ursprungsbildes, die verwendet wird zum:
Definieren eines monokularen Hauptstrahls zum Betrachten eines Objektpunkts in dem Sichtfeld durch eine Brillenglaslinse, die vor dem Auge plaziert ist, während ein Strahl von dem Objektpunkt emittiert wird und durch einen bestimmten Punkt auf der Brillenglaslinse hin zum Drehpunkt gelangt, und einer monokularen Richtung der Drehung als die Richtung eines ausgegebenen Strahls von der hinteren Oberfläche der Brillenglaslinse hin zu dem Drehpunkt;
Definieren einer Richtung einer binokularen, synkinetischen Drehung zum Betrachten eines Objektpunkts, der durch beide monokulare Drehrichtungen des rechten und des linken Auges zum Betrachten des Objektpunkts eindeutig bestimmt wird;
Ableiten einer zentralen Richtung einer binokularen, synkinetischen Drehung zum Betrachten des Objektpunkts in der Mitte des Gesichtsfeldes mittels Strahlverfolgung,
wobei jeweils sowohl der linke als auch der rechte monokulare Hauptstrahl durch jeweils eine spezifische Position gelangt,
Definieren eines Nach-Linse-Gesichtsfeldes als das Gesichtsfeld, dessen zentrale Achse entlang der Richtung der binokularen, synkinetischen Drehung verläuft, und Ableiten, für alle Objektpunkte, die jeweils einem Pixel des Ursprungsbildes entsprechen, der Richtungen der binokularen, synkinetischen Drehung und ferner der Positionen in dem Nach-Linse-Gesichtsfeld;
Erzeugen eines verzerrten Bildes, bei dem es sich um ein Bild von virtuellen Objekten in dem Nach-Linse-Gesichtsfeld handelt und das eine Verzerrung aufweist, die durch die Brillenglaslinsen bewirkt wird; und
Ableiten, für alle Objektpunkte, die jeweils einem Pixel des Ursprungsbildes entsprechen, von Paßpunkten von sowohl dem rechten als auch dem linken monokularen Hauptstrahl auf jeweils einer Brillenglaslinse;
eine Einrichtung zum Ableiten von Positionen der Brillenglas-Frames, die ein Erzeugen von Bildern von Brillenglas-Frame-Markierungen aufweist, die Positionen von rechten und linken Brillenglas-Frames auf der Ursprungsbild anzeigen, oder auf dem verzerrten Ursprungsbild durch Verwenden von Daten der Paßpositionen des rechten und des linken monokularen Hauptstrahls auf jeweils einer Brillenglaslinse, die durch die Einrichtung zum Erzeugen eines verzerrten Ursprungsbildes abgeleitet werden;
eine Einrichtung zum Ableiten einer PSF (Punktstreufunktionen), die zum Ableiten von monokularen und binokularen PSFs für alle Objektpunkte verwendet wird, die jeweils einem Pixel des Ursprungsbildes entsprechen. Für jeden Objektpunkt weist sie folgende Schritte auf:
Einführen eines akkommodationsabhängigen okular-optischen Systemmodells in sowohl das rechte als auch das linke Auge;
Berechnen von Abständen zwischen dem Objektpunkt und den okularen Drehpunkten des rechten und des linken Auges unter Verwendung der Objektivabstände, die durch eine Einrichtung zum Erzeugen eines Ursprungsbildes erhalten werden;
Einstellen von Akkommodationskräften von sowohl dem rechten als auch dem linken Auge auf den gleichen oder einen anderen Wert gemäß den Brechkräften der Brillenglaslinsen an den Paßpositionen des rechten und des linken monokularen Haupstrahls auf jeweils einer Brillenglaslinse, wobei diese Positionen durch eine Einrichtung zum Erzeugen eines verzerrten Ursprungsbildes abgeleitet werden;
Ableiten von beiden monokularen PSFs (Punktstreufunktionen) des rechten und des linken Auges in jedem zusammengesetzten optischen System, das die Brillenglaslinsen und das akkommodationsabhängige okular-optische Systemmodel aufweist, das gemäß jeder monokularen Richtung der Drehung gedreht wird, wobei eine PSF eine Funktion ist, die eine Verteilung der Helligkeit auf jeweils einer Netzhaut von jedem akkommodationsabhängigen okular-optischen Systemmodel aufgrund des von einem Objektpunkt emittierten Licht darstellt; und
Ableiten einer binokularen PSF, die monokulare PSFs des linken und des rechten Auges vereint; und
eine Einrichtung zum Falten, die verwendet wird zum:
Falten des verzerrten Ursprungbildes, das durch eine Einrichtung zum Erzeugen eines verzerrten Ursprungsbildes erzeugt wird, und der binokularen PSFs von allen Objektpunkten, die jeweils einem Pixel des Ursprungsbildes entsprechen, die durch eine Einrichtung zum Ableiten einer PSF abgeleitet werden, zum:
Erzeugen eines binokularen, synkinetischen, rotationsbasierten Netzhautbildes, von dem angenommen wird, daß es das Bild der virtuellen Objekte ist, die in dem virtuellen, dreidimensionalen Raum plaziert sind, der binokular durch Augen betrachtet wird, die an spezifischen Positionen plaziert sind, deren zentrale Richtung der binokularen, synkinetischen Drehung entlang einer spezifischen Richtung verläuft und deren monokulare Hauptstrahlen durch spezifische Positionen auf den Brillenglaslinsen gelangen; und
Überlagern von Brillenglas-Frame-Markierungen, die in dem Schritt zum Ableiten einer Brillenglas-Frame-Position auf dem binokularen, synkinetischen, rotationsbasierten Netzhautbild erzeugt werden.

9. Vorrichtung zum Simulieren, wie Dinge gesehen werden, wenn die Außenwelt durch Brillenglaslinsen betrachtet wird, die vor sowohl dem rechten als auch dem linken Auge plaziert sind, nach Anspruch 8, die eine Einrichtung aufweist zum:
Erzeugen von virtuellen Objekten, die durch eine Computergraphik erstellt werden, und Plazieren derselben in einen virtuellen, dreidimensionalen Raum;
Erzeugen eines Berichts von Veränderungen in einer zeitlichen Abfolge von der Position der Mitte der beiden okularen Drehpunkte, der zentralen Richtung der binokularen, synkinetischen Drehung, der Paßpunkte der beiden monokularen Hauptstrahlen auf jeweils einer Brillenglaslinse, des Betrags der Verformung und der Verschiebung der virtuellen Objekte;
Erzeugen eines binokularen, synkinetischen, rotationsbasierten Netzhautbildes zu jedem Zeitpunkt gemäß dem erzeugten Bericht unter Verwendung des in den Ansprüchen 4 und 5 beschriebenen Verfahrens; und
Erzeugen eines Videobildes durch Bearbeiten der binokularen, synkinetischen, rotationsbasierten Netzhautbilder von allen Zeitpunkten.
